# EUROPÄISCHE PATENTSCHRIFT

(11) **EP 3 787 854 B1**
(45) Veröffentlichungstag und Bekanntmachung des Hinweises auf die Patenterteilung: **01.06.2022**
(21) Anmeldenummer: 19766208.3
(22) Anmeldetag: 05.09.2019
(51) Int. Cl.: B25J 15/00, B65H 3/20, B65H 5/14

(54) **HANDHABUNGSVORRICHTUNG ZUM UMPOSITIONIEREN VON OBJEKTEN**
HANDLING DEVICE FOR REPOSITIONING OBJECTS
DISPOSITIF DE MANIPULATION POUR LE REPOSITIONNEMENT DES OBJETS

(30) Priorität: 26.09.2018 DE 102018216393
(43) Veröffentlichungstag der Anmeldung: 10.03.2021
(73) Patentinhaber: Festo SE & Co. KG, 73734 Esslingen (DE)
(72) Erfinder: PUDEWILLS, Leif, 73728 Esslingen (DE); SINGER, Markus, 73207 Plochingen (DE); WAIBEL, Tobias, 73760 Ostfildern (DE); SCHÖN, Manuel, 70597 Stuttgart (DE); MÜLLER-BOYSEN, Ulrich, 73732 Esslingen (DE)
(74) Vertreter: Patentanwälte Magenbauer & Kollegen Partnerschaft mbB
(86) Internationale Anmeldenummer: PCT/EP2019/073710
(87) Internationale Veröffentlichungsnummer: WO 2020/064293

(56) Entgegenhaltungen:
- EP-A2- 0 388 398
- DE-B- 1 135 738
- DE-B4-102012 001 095
- JP-A- S62 249 836
- JP-A- 2001 315 981
- US-A- 4 887 858

## Beschreibung

Die Erfindung betrifft eine Handhabungsvorrichtung zum Umpositionieren von Objekten, mit einer Adhäsions-Greifvorrichtung, die eine Tragstruktur aufweist, an der eine Befestigungsschnittstelle zur Befestigung der Adhäsions-Greifvorrichtung an einer Positioniervorrichtung ausgebildet ist, durch die die Adhäsions-Greifvorrichtung unter Ausführung einer Handhabungsbewegung bewegbar und positionierbar ist, mit mindestens einer an der Tragstruktur angeordneten Greifeinheit, die über ein sich in einer Hauptebene der Adhäsions-Greifvorrichtung zwischen zwei zueinander beabstandeten Haltebereichen erstreckendes, zumindest einseitig eine Adhäsionsfläche aufweisenden biegeflexibles Adhäsionsband verfügt, das einen durch einen Arbeitsbereich der Greifeinheit hindurchgeführten Längenabschnitt hat, der einen Greifabschnitt bildet, durch den in dem Arbeitsbereich ein umzupositionierendes Objekt durch die Adhäsionswirkung der Adhäsionsfläche ergreifbar und lösbar festhaltbar ist.

Eine aus der US 4 887 858 bekannte Handhabungsvorrichtung dieser Art enthält eine Adhäsions-Greifvorrichtung mit einem Adhäsionsband, das an zwei zueinander beabstandeten Haltebereichen auf je eine Wickelrolle aufgewickelt ist und unter Umlenkung um zwei Umlenkrollen durch einen Arbeitsbereich hindurchgeführt ist. Der sich in dem Arbeitsbereich erstreckende Längenabschnitt des Adhäsionsbandes bildet einen Greifabschnitt, der in der Lage ist, biegeschlaffe, luftdurchlässige Objekte zu ergreifen und zwecks Vereinzelung zeitweilig festzuhalten. Den Wickelrollen ist eine Bandtransport-Antriebseinrichtung zugeordnet, durch die eine diskontinuierliche Transportbewegung des Adhäsionsbandes erzeugbar ist, wenn der momentan in Benutzung befindliche Greifabschnitt aufgrund von Verschmutzung verbraucht ist. In dem Arbeitsbereich befindet sich ein Block mit Luftaustrittsdüsen, durch die hindurch Druckluft ausblasbar ist, die durch das momentan festgehaltene Objekt hindurchtreten kann, um es von einem darunterliegenden Objekt zu separieren.

In der EP 0 388 398 A2 ist eine Vorrichtung zum Abnehmen flächiger Werkstücke von einer anklebenden Unterfolie beschrieben. Die Vorrichtung hat eine Adhäsions-Greifvorrichtung, die mit einer um zwei Wickeltrommeln umlaufenden Haftfolie ausgestattet ist. Die Haftfolie kann zu einer Umlaufbewegung um die Wickeltrommeln angetrieben werden, um das an ihr haftende Werkstück abzulegen. Bei diesem Ablagevorgang findet eine Relativbewegung der gesamten Adhäsions-Greifvorrichtung bezüglich des anderweitig festgehaltenen Werkstückes statt.

Eine aus der DE 10 2012 001 095 B4 bekannte Greifvorrichtung hat einen Anlageabschnitt, an dem ein Adhäsionselement angeordnet ist, das mit Hilfe des Anlageabschnitte an ein zu ergreifendes Objekt andrückbar ist. Das durch Adhäsionswirkung festgehaltene Objekt ist bei Bedarf wieder ablegbar, indem durch eine Einstelleinrichtung eine Formänderung des Anlageabschnittes einschließlich des daran angebrachten Adhäsionselementes hervorgerufen wird.

Eine aus der JP 2001- 315 981 A bekannte Handhabungsvorrichtung hat eine zu einer vertikalen Schwenkbewegung antreibbare Tragstruktur, an der eine Abwickelrolle und eine Aufwickelrolle sitzen, zwischen denen sich ein Adhäsionsband erstreckt, das auch noch mit einem Greifabschnitt um eine Andrückrolle herumgeführt ist. An dem Greifabschnitt kann ein umzupositionierender Gegenstand haften. Die Andrückrolle sitzt drehbar auf einer an der Tragstruktur befestigten Trägerwelle, sodass sie die Schwenkbewegung der Tragstruktur mitmacht. Die Andrückrolle sitzt in einem gehäuseartigen Andrückelement, das durch einen Stellmagnet relativ zu der Andrückrolle bewegbar und durch eine Feder nach unten vorgespannt ist. Zum Ablösen des Gegenstandes wird der zuvor aktivierte Stellmagnet deaktiviert, sodass das Andrückelement durch die Kraft der Feder relativ zur Andrückrolle nach unten fährt und den Gegenstand vom Adhäsionsband wegdrückt. Alternativ kann der Gegenstand zu seinem Ablösen zunächst durch das Andrückelement nach unten an eine Basis angedrückt werden, ohne ihn vom Adhäsionsband wegzudrücken. Das eigentliche Ablösen geschieht anschließend dadurch, dass die Tragstruktur zusammen mit der Andrückrolle relativ zu dem durch die Feder festgehaltenen Andrückelement nach oben geschwenkt wird.

Aus der In der JP S62- 249 836 A geht eine Handhabungsvorrichtung hervor, die ein zwischen zwei Wickelrollen verlaufendes Adhäsionsband hat, das um eine als Andrückrolle fungierende Führungsrolle herumgeschlungen ist. Die Führungsrolle ist drehbar an einer auf und ab bewegbaren Tragstruktur gelagert. Das Ablösen eines am Adhäsionsband anhaftenden Gegenstandes erfolgt mittels eines separaten Lösehebels, der durch einen Zylinder verschwenkbar ist, um von oben her auf den festgehaltenen Gegenstand einzuwirken und selbigen vom Adhäsionsband wegzudrücken.

Bei einer in der DE 11 35 738 A beschriebenen Handhabungsvorrichtung ist ein Klebeband um eine Vielzahl von Umlenkrollen herumgeschlungen, unter denen sich zwei unten angeordnete Haftstoffträgerrollen befinden. Der momentan um eine Haftstoffträgerrolle herumgeschlungene Längenabschnitt des Klebebandes fungiert als Greifabschnitt. Zum Ablösen eines an den Greifabschnitten anhaftenden Gegenstandes wird ein Entriegelungsmechanismus betätigt, durch den eine Feder aktiviert wird, sodass die Haftstoffträgerrollen relativ zu einer Andrückplatte nach oben fahren, wobei der anhaftende Gegenstand durch die Andrückplatte zurückgehalten und von den Greifabschnitten weggedrückt wird.

Der Erfindung liegt die Aufgabe zu Grunde, Maßnahmen zu treffen, die bei einer mit einem Adhäsionsband ausgestatteten Adhäsions-Greifvorrichtung insbesondere ein einfaches und zuverlässiges Lösen eines zuvor ergriffenen und festgehaltenen Objektes begünstigen.

Zur Lösung dieser Aufgabe ist in Verbindung mit der eingangs genannten Merkmalen vorgesehen, dass die Adhäsions-Greifvorrichtung eine zum Lösen eines durch den Greifabschnitt des Adhäsionsbandes ergriffenen Objektes ausgebildete Löseeinrichtung umfasst, die mindestens ein im Arbeitsbereich der Greifeinheit angeordnetes, von dem Adhäsionsband partiell umschlungenes und in der Hauptebene relativ zu der Tragstruktur zur Ausführung einer Lösebewegung translatorisch bewegbares Löse-Umlenkelement aufweist und die außerdem eine an der Tragstruktur angeordnete Löse-Antriebseinrichtung aufweist, durch die eine mit der Lösebewegung des Löse-Umlenkelementes einhergehende, ein aktives Abziehen des Adhäsionsbandes vom ergriffenen Objekt bewirkende Umlaufbewegung des Greifabschnittes um das Löse-Umlenkelement hervorrufbar ist.

Die erfindungsgemäße Handhabungsvorrichtung umfasst eine Adhäsions-Greifvorrichtung, die mindestens eine mit einem Adhäsionsband ausgestattete Greifeinheit aufweist. Ein Längenabschnitt des Adhäsionsbandes fungiert als ein Greifabschnitt, der sich in einem Arbeitsbereich der Greifeinheit erstreckt und in der Lage ist, ein umzupositionierendes Objekt durch Haftwirkung lösbar festzuhalten. Die Greifeinheit wird von einer Tragstruktur der Adhäsions-Greifvorrichtung getragen, die mit einer Befestigungsschnittstelle versehen ist, über die die Adhäsions-Greifvorrichtung an einer Positioniervorrichtung anbringbar oder angebracht ist, beispielsweise am beweglichen Arm eines Roboters. Dadurch besteht die Möglichkeit, die Adhäsions-Greifvorrichtung einschließlich ihrer Greifeinheit unter Ausführung einer Handhabungsbewegung zu bewegen und dabei ein festgehaltenes Objekt räumlich umzupositionieren. Da der Festhalteeffekt auf einer Adhäsionswirkung basiert, können nicht nur starre, sondern auch biegeschlaffe und selbst luftdurchlässige Objekte sicher ergriffen und festgehalten werden. Hierbei ist insbesondere an Textilien gedacht. Die zusätzlich in die Adhäsions-Greifvorrichtung integrierte Löseeinrichtung ermöglicht bei jedem Objekttyp ein bedarfsgemäßes zuverlässiges Lösen vom Greifabschnitt des Adhäsionsbandes an der gewünschten Ablageposition. Die Löseeinrichtung hat mindestens ein im Arbeitsbereich der Greifeinheit angeordnetes Löse-Umlenkelement, das von dem sich zwischen zwei zueinander beabstandeten Haltebereichen erstreckenden Adhäsionsband partiell umschlungen ist. Eine Besonderheit des Löse-Umlenkelementes besteht in seiner translatorischen Bewegbarkeit relativ zur Tragstruktur in der als Hauptebene bezeichneten Erstreckungsebene des Adhäsionsbandes. Dadurch kann mittels einer Löse-Antriebseinrichtung der Löseeinrichtung eine Umlaufbewegung des Greifabschnittes des Adhäsionsbandes um das Löse-Umlenkelement hervorgerufen werden, die mit einer als Lösebewegung bezeichneten Verlagerungsbewegung des Löse-Umlenkelementes relativ zur Tragstruktur kombiniert ist. Dieser Vorgang ruft ein aktives Abziehen des Adhäsionsbandes vom momentan ergriffenen Objekt hervor. Der Greifabschnitt wird bei diesem Lösevorgang in seiner Längsrichtung allmählich von der einen zur anderen Seite hin abgezogen und somit quasi vom bis dahin festgehaltenen Objekt abgeschält. Umzupositionierende Objekte können somit ungeachtet ihres strukturellen Aufbaus sicher umpositioniert und an der Zielposition zuverlässig wieder abgelegt werden. Die translatorische Lösebewegung ist bevorzugt eine Linearbewegung, kann aber auch eine nicht-lineare Bewegung sein, insbesondere eine einem Bogen, vorzugsweise einem Kreisbogen folgende Bewegung.

Vorteilhafte Weiterbildungen der Erfindung gehen aus den Unteransprüchen hervor.

Bei dem Adhäsionsband handelt es sich vorzugsweise um ein Klebeband, insbesondere um ein Selbstklebeband, dessen Adhäsionsfläche von einer Selbstklebefläche gebildet ist. Der zur Bildung der Selbstklebefläche genutzte Klebstoff kann objektbezogen gewählt werden. Abhängig von der Eigenart der handzuhabenden Objekte wird ein Adhäsionsband mit besonders gut geeigneten selbstklebenden Klebeeigenschaften verwendet. Die Verwendung eines Selbstklebebandes hat den Vorteil, dass während des Betriebes der Adhäsions-Greifvorrichtung kein Klebstoff aufgebracht werden muss.

Das Adhäsionsband kann alternativ beispielsweise auch so ausgebildet sein, dass die Adhäsionswirkung auf den sogenannten Van-der-Waals-Kräften beruht. Solche Adhäsionskräfte lassen sich zum Beispiel dadurch realisieren, dass das Adhäsionsband an der Adhäsionsfläche mit einer Mikrostruktur aus diskret ausgebildeten Haftstempeln versehen ist, wobei das Adhäsionsband bevorzugt aus einem einseitig mit einer Silikonfolie beschichteten Trägerband besteht, wobei die Silikonfolie mit der Mikrostruktur versehen ist. Eine entsprechende Ausgestaltung einer Haftfläche ist in der eingangs erwähnten DE 10 2012 001 095 B4 beschrieben.

Das Adhäsionsband kann in den beiden Haltebereichen fest an der Tragstruktur fixiert sein. Ist der Greifabschnitt verbraucht oder verschlissen, ist das Adhäsionsband in diesem Fall einfach auszutauschen. Vorgezogen wird allerdings eine Ausführungsform, bei der das Adhäsionsband in den beiden Haltebereichen um jeweils eine Wickelrolle herumgewickelt ist, die bezüglich der Tragstruktur um eine zu der Hauptebene rechtwinkelige Drehachse drehbar ist. Eine dieser Wickelrollen bildet eine das unverbrauchte Adhäsionsband zur Verfügung stellende Abwickelrolle, während die andere Wickelrolle als eine das verbrauchte Adhäsionsband aufnehmende Aufwickelrolle fungiert. Ist der Greifabschnitt verbraucht, lässt sich in dem Arbeitsbereich sehr einfach ein neuer Greifabschnitt positionieren, indem das Adhäsionsband ein stückweit von der Abwickelrolle auf die Aufwickelrolle umgespult wird.

Im Zusammenhang mit den vorgenannten Wickelrollen kann die Adhäsions-Greifvorrichtung für ein manuelles Umspulen des Adhäsionsbandes ausgebildet sein. Beispielsweise kann mit der Aufwickelrolle ein Handbetätigungsglied gekoppelt sein, das sich mit einer Hand betätigen lässt, zum Beispiel eine Handkurbel. Als vorteilhafter und vor allem komfortabler wird eine Ausführungsform angesehen, bei der jede Greifeinheit zum Umspulen des Adhäsionsbandes von der Abwickelrolle auf die Aufwickelrolle über eine Bandtransport-Antriebseinrichtung verfügt, die beispielsweise elektrisch oder mittels Fluidkraft betätigbar ist und durch Aufschaltung eines Betätigungssignals veranlasst werden kann, eine Transportbewegung eines Adhäsionsbandes zum Weitertakten des Adhäsionsbandes hervorzurufen. Die Bandtransport-Antriebseinrichtung kann zur manuellen Aktivierung, beispielsweise mittels eines geeigneten Schalters, ausgebildet sein oder auch zur sensorgesteuerten oder zeitgesteuerten Betätigung mittels einer elektronischen Steuereinrichtung der Handhabungsvorrichtung.

Bevorzugt verfügt das Löse-Umlenkelement über eine von dem Adhäsionsband umschlungene, bogenförmig gekrümmte Umlenkfläche. Dadurch ergibt sich bei einem mit einer Relativbewegung zwischen dem Greifabschnitt und dem Löse-Umlenkelement verbundenen Objekt-Lösevorgang eine vorteilhafte Materialschonung des Adhäsionsbandes und dementsprechend ein reduzierter Verschleiß. Die von dem Adhäsionsband umschlungene Bogenlänge erstreckt sich vorzugsweise um weniger als 180 Grad. Der tatsächliche Umschwingungswinkel hängt insbesondere von der bei der Greifeinheit realisierten Bandführung des Adhäsionsbandes ab.

Das Löse-Umlenkelement kann prinzipiell ein nicht rotierbares Gleitelement sein, an dem das Adhäsionsband mit seiner der Adhäsionsfläche entgegengesetzten Rückfläche gleitverschieblich anliegt. Bevorzugt ist das Löse-Umlenkelement jedoch als eine Umlenkrolle ausgebildet, die relativ zur Tragstruktur um eine zu der Hauptebene rechtwinkelige Drehachse drehbar ist. Die radial orientierte Außenumfangsfläche des Löse-Umlenkelementes definiert eine Umlenkfläche für das Adhäsionsband. Hier ist vorteilhaft, dass sich das rollenförmige Löse-Umlenkelement bei seiner Lösebewegung und auch bei einer eventuellen Transportbewegung des Adhäsionsbandes verschleißarm am Greifabschnitt des Adhäsionsbandes abwälzen kann.

Bei einer möglichen Ausführungsform der Handhabungsvorrichtung verfügt die Adhäsions-Greifvorrichtung über nur eine einzige Greifeinheit. Eine solche Bauform empfiehlt sich insbesondere zur Umpositionierung von relativ kleinen Objekten.

Bei einer ebenfalls vorteilhaften Ausführungsform der Handhabungsvorrichtung ist die Adhäsions-Greifvorrichtung mit mehreren an der Tragstruktur angeordneten Greifeinheiten ausgestattet, die jeweils einen eigenen Arbeitsbereich aufweisen, durch den ein Greifabschnitt eines Adhäsionsbandes hindurchgeführt ist und dem jeweils ein eigenes Löse-Umlenkelement zugeordnet ist. Mehrere Greifeinheiten können beispielsweise punktuell so verteilt angeordnet sein, dass sich mehrere Arbeitsbereiche ergeben, die in einer gemeinsamen Arbeitsebene liegen. Mehrere Greifeinheiten sind zum Beispiel matrixartig verteilt angeordnet. Dies begünstigt die Handhabung großflächiger Objekte. Bevorzugt können die mehreren Greifeinheiten in aufeinander abgestimmter Weise betrieben werden.

Bei einer bevorzugten Ausführungsform der Handhabungsvorrichtung ist die Adhäsions-Greifvorrichtung mit zwei oder einer noch größeren Anzahl von an der Tragstruktur angeordneten Greifeinheiten ausgestattet, von denen wenigstens eine Greifeinheit relativ zu der Tragstruktur und mindestens einer weiteren Greifeinheit verstellbar und positionierbar ist. Die Arbeitsbereiche der mehreren Greifeinheiten liegen dabei zweckmäßigerweise nach wie vor in einer gemeinsamen Arbeitsebene, sind jedoch so positionierbar, dass sie in der Arbeitsebene unterschiedliche Relativpositionen zueinander einnehmen. Bevorzugt sind mehrere und insbesondere sämtliche Greifeinheiten in dieser Weise relativ zu der Tragstruktur und auch relativ zueinander verstellbar und positionierbar.

Beispielsweise sind an einer Tragstruktur vier Greifeinheiten so angeordnet, dass sie sich paarweise gegenüberliegen, wobei der zwischen den Greifeinheiten jedes Greifeinheitenpaares vorhandene Abstand variabel einstellbar ist. Jedes Greifeinheitenpaar liegt bevorzugt auf einer zu der Arbeitsebene parallelen Geraden, wobei sich die beiden Geraden rechtwinkelig kreuzen.

Die Handhabungsvorrichtung ist beispielsweise so ausgebildet, dass das Verstellen der mindestens einen Greifeinheit vor Ausführung eines Handhabungsvorganges erfolgen kann, um die mehreren Greifeinheiten bezüglich eines handzuhabenden Objektes optimal auszurichten.

Die Handhabungsvorrichtung kann ferner so ausgebildet sein, dass das Verstellen der mindestens einen Greifeinheit relativ zur Tragstruktur während eines Handhabungsvorganges erfolgen kann, insbesondere bei bereits ergriffenem und festgehaltenem Objekt. In Verbindung mit biegeschlaffen Objekten, insbesondere textilen Objekten, beispielsweise Stoffbahnen, ermöglicht dies insbesondere ein Spannen des Objektes vor dem Wiederablegen.

Das Verstellen der Greifeinheiten ist insbesondere motorisch mittels mindestens einer zum Beispiel elektrisch oder durch Fluidkraft betätigbaren Antriebseinrichtung hervorrufbar. Eine elektronische Steuereinrichtung der Handhabungsvorrichtung kann die Betätigung der Stellmotoren steuern. Zusätzlich oder alternativ kann auch eine manuelle Verstellbarkeit vorgesehen sein.

Bei einer bevorzugten Ausgestaltung einer mit mehreren Greifeinheiten ausgestatteten Adhäsions-Greifvorrichtung sind die Arbeitsbereiche mehrerer Greifeinheiten in einer zu der Hauptebene der Adhäsions-Greifvorrichtung parallelen Hauptrichtung beabstandet zueinander angeordnet. Die mehreren Arbeitsbereiche liegen also in der gleichen Ebene, in der sich auch das Adhäsionsband erstreckt. Dies begünstigt vor allem die Handhabung von Objekten mit großer Baulänge.

Die mehreren Arbeitsbereiche sind vorzugsweise so angeordnet, dass sie in einer Höhenrichtung der Adhäsions-Greifvorrichtung auf gleicher Höhe miteinander liegen. Sie liegen dann gemeinsam in einer Arbeitsebene, die sich rechtwinkelig zu der Hauptebene erstreckt.

Mehrere Greifeinheiten der Adhäsions-Greifvorrichtung können unabhängig voneinander ausgebildet sein und jeweils über ein eigenes Adhäsionsband verfügen. Jedes Adhäsionsband verläuft dabei zwischen zwei ihm allein zugeordneten, beispielsweise von je einer Wickelrolle gebildeten Haltebereichen der Tragstruktur. Der Vorteil einer solchen Ausgestaltung ist, dass die mehreren Greifeinheiten relativ einfach unabhängig voneinander nutzbar sind. Beispielsweise können bei einem Lösevorgang mehrere Greifeinheiten der Adhäsions-Greifvorrichtung zeitlich versetzt zueinander von einem Objekt gelöst werden.

Als besonders vorteilhaft wird es bei einer mit mehreren Greifeinheiten ausgestatteten Adhäsions-Greifvorrichtung angesehen, wenn ein und dasselbe Adhäsionsband gleichzeitig als Adhäsionsband für mehrere Greifeinheiten genutzt ist. Mehreren Greifeinheiten der Adhäsions-Greifvorrichtung ist dann ein zwischen zwei Haltebereichen der Tragstruktur verlaufendes Adhäsionsband gemeinsam zugeordnet. Dieses gemeinsame Adhäsionsband ist durch die Arbeitsbereiche der mehreren Greifeinheiten hindurchgeführt, wobei die durch diese Arbeitsbereiche hindurchgeführten Greifabschnitte von zueinander beabstandeten Längenabschnitten ein und derselben Adhäsionsbandes gebildet sind. Eine solche Ausführungsform begünstigt eine synchronisierte Betätigung der mehreren Greifeinheiten. Zudem reduziert sich die Anzahl der in der Adhäsions-Greifvorrichtung gleichzeitig zu verwendenden Adhäsionsbänder.

Bei einer besonders kostengünstigen Ausführung der Handhabungsvorrichtung ist im Arbeitsbereich mindestens einer und bevorzugt jeder Greifeinheit nur das Löse-Umlenkelement als ein Umlenkelement für das Adhäsionsband vorhanden. Dies führt in der Regel dazu, dass der Greifabschnitt mit einem bogenförmigen Längsverlauf durch den Arbeitsbereich hindurchtritt. Bei einer solchen Bauform ist die Kontaktfläche zwischen dem Greifabschnitt und dem zu ergreifenden Objekt relativ klein, sodass das Objekt sehr schonend behandelt wird.

Alternativ kann mindestens eine Greifeinheit in ihrem Arbeitsbereich zusätzlich zu dem Löse-Umlenkelement ein diesbezüglich in der Hauptebene beabstandetes weiteres Umlenkelement für das Adhäsionsband aufweisen, das wie das Löse-Umlenkelement von dem Adhäsionsband partiell umschlungen ist. Der Greifabschnitt erstreckt sich mit einem bevorzugt linearen Längsverlauf zwischen dem Löse-Umlenkelement und dem weiteren Umlenkelement. Bei der durch die Löse-Antriebseinrichtung hervorrufbaren Lösebewegung des Löse-Umlenkelementes verringert sich der Abstand zwischen dem Löse-Umlenkelement und dem weiteren Umlenkelement, sodass der mit einem festgehaltenen Objekt adhäsiv zusammenwirkende Flächenabschnitt des Greifabschnittes und folglich die Haltekraft betragsmäßig verringert wird.

Vorzugsweise sind das Löse-Umlenkelement und das weitere Umlenkelement bei jeder Greifeinheit in einer gemeinsamen Ebene angeordnet, die rechtwinkelig zu einer Höhenrichtung der Adhäsions-Greifvorrichtung verläuft.

Bei dem einem Arbeitsbereich zugeordneten weiteren Umlenkelement handelt es sich vorzugsweise um ein bezüglich der Tragstruktur ortsfestes, stationäres Umlenkelement. Anders als das Löse-Umlenkelement behält es bei einem Lösevorgang seine räumliche Relativposition bezüglich der Tragstruktur bei. Dies verringert den kinematischen Aufwand zur Realisierung der Greifeinheit. Grundsätzlich ist es jedoch möglich, eine Greifeinheit so auszubilden, dass auch das weitere Umlenkelement ein Löse-Umlenkelement bildet, das bei einem Lösevorgang eine translatorische Relativbewegung bezüglich der Tragstruktur in der Hauptebene ausführen kann oder ausführt.

Ungeachtet dessen, ob das weitere Umlenkelement bezüglich der Tragstruktur stationär oder beweglich ist, ist es vorteilhaft, wenn dieses weitere Umlenkelement als eine bezüglich der Tragstruktur um eine zu der Hauptebene rechtwinkelige Drehachse drehbare Umlenkrolle ausgebildet ist. Bevorzugt ist sowohl das Löse-Umlenkelement als auch das weitere Umlenkelement jeweils als eine solche drehbare Umlenkrolle ausgebildet. Jede Umlenkrolle ist bevorzugt frei drehbar gelagert und nicht direkt mit einer Antriebseinrichtung gekoppelt.

Eine bevorzugte Ausgestaltung sieht vor, dass das Löse-Umlenkelement durch eine Federeinrichtung mit einer Federkraft in eine Greifstellung vorgespannt ist. Zum Ergreifen eines Objektes ist die Adhäsions-Greifvorrichtung durch entsprechende Betätigung der sie tragende Positioniervorrichtung bei in der Greifstellung befindlichem Löse-Umlenkelement mit dem Greifabschnitt an das zu ergreifende Objekt abdrückbar. Es kann vorgesehen sein, dass das Löse-Umlenkelement beim Andrücken des Greifabschnittes an das Objekt entgegen der Federkraft auslenkbar ist oder ausgelenkt wird. Dies beispielsweise bis zur Anlage des Objektes an einer Objekt-Abstützeinrichtung der Adhäsions-Greifvorrichtung. Jedenfalls ist es bei einem durch eine Federeinrichtung vorgespannten Löse-Umlenkelement vorteilhaft, wenn diese Löse-Umlenkelement durch die von der Löse-Antriebseinrichtung herovorrufbare Lösebewegung entgegen der Federkraft und relativ zu der Tragstruktur in mindestens eine von der Greifstellung abweichende Lösestellung bewegbar ist. Dadurch wird der um das Löse-Umlenkelement herumgeführte Greifabschnitt vom zu lösenden Objekt abgezogen. Dieser Vorgang kann vorteilhaft dadurch unterstützt sein, dass das Objekt durch eine Objekt-Abstützeinrichtung an einem Nachfolgen des Löse-Umlenkelementes aktiv gehindert wird. Besonders vorteilhaft ist dies bei der Handhabung flexibler, insbesondere biegeschlaffer Objekte, wie beispielsweise textile Objekte.

Die Löse-Antriebseinrichtung ist gemäß einem bevorzugten Aspekt der Erfindung so ausgebildet, dass durch sie eine die Lösebewegung des Löse-Umlenkelementes hervorrufende Zugkraft in das Adhäsionsband einleitbar ist. Die Zugkraft ist insbesondere in der Bandlängsrichtung in das Adhäsionsband einleitbar. Mit anderen Worten ist das Löse-Antriebseinrichtung ausgebildet, um an dem Adhäsionsband zu ziehen, wobei das Adhäsionsband aufgrund des Umstandes, dass es in einem der Haltebereiche festgehalten wird, mit der der Adhäsionsfläche entgegengesetzten Rückfläche an das Löse-Umlenkelement angedrückt wird und selbiges mit der daraus resultierenden Drücckraft zur Ausführung der Lösebewegung verlagert. Diese Ausgestaltung ist besonders vorteilhaft umsetzbar in Verbindung mit einem durch eine Federeinrichtung federnd in eine Greifstellung vorgespannten Löse-Umlenkelement.

Um die Zugkraft in das Adhäsionsband einzuleiten, verfügt die Löse-Antriebseinrichtung zweckmäßigerweise über mindestens einen in einem der Haltebereiche antriebsmäßig mit dem Adhäsionsband zusammenwirkenden Antriebsmotor, der bevorzugt elektrisch betätigt ist, alternativ aber beispielsweise auch von einer durch Fluidkraft betätigbaren Bauart sein kann. Bevorzugt ist nur einer der beiden Haltebereiche motorisiert, während der zweite Haltebereich antriebslos ausgebildet ist und insbesondere über eine zumindest während der Einleitung der Zugkraft zum lösbaren Festhalten des Adhäsionsbandes ausgebildete Bremse verfügt. Hierbei kann es sich um eine aktive, beispielsweise elektrisch betätigbare Bremse handeln oder um eine passive Bremse, die beispielsweise auf einer Rastfunktion basiert und deren Bremswirkung nur bis zu einer gewissen Höhe der in das Adhäsionsband eingeleiteten Zugkraft auftritt.

Als besonders zweckmäßig wird es angesehen, die Löse-Antriebseinrichtung zum Hervorrufen der Lösebewegung des Löse-Umlenkelementes unabhängig von dem Adhäsionsband antriebsmäßig mit dem Löse-Umlenkelement zu koppeln. Somit kann das Löse-Umlenkelement durch die Löse-Antriebseinrichtung direkt relativ zu der Tragstruktur zur Ausführung der Lösebewegung angetrieben werden. Aus dieser Lösebewegung ergibt sich dann unmittelbar eine Relativbewegung des Adhäsionsbandes bezüglich des Löse-Umlenkelementes, aus der die eingangs erwähnte Umlaufbewegung des Greifabschnittes um das Löse-Umlenkelement resultiert.

Selbstverständlich kann die Löse-Antriebseinrichtung auch so ausgeführt sein, dass die Umlaufbewegung des Greifabschnittes um das Löse-Umlenkelement und die Lösebewegung des Löse-Umlenkelementes durch gleichzeitige antriebsmäßige Einflussnahme auf sowohl das Adhäsionsband als auch das Löse-Umlenkelement hervorrufbar ist.

Bei jeder Greifeinheit sitzt das Löse-Umlenkelement zweckmäßigerweise ortsfest an einer bezüglich der Tragstruktur gesonderten Halteeinheit, die ihrerseits zum Hervorrufen der Lösebewegung des Löse-Umlenkelementes zur Ausführung einer Halteeinheitbewegung an der Tragstruktur diesbezüglich bewegbar gelagert ist. Die an der Tragstruktur angeordnete Löse-Antriebseinrichtung ist antriebsmäßig mit der Halteeinheit gekoppelt. Eine durch die Löse-Antriebseinrichtung hervorrufbare Relativbewegung der Halteeinheit bezüglich der Tragstruktur hat unmittelbar die Lösebewegung der Lösebewegung des Löse-Umlenkelementes zur Folge.

Die Halteeinheit ist vorzugsweise linear verschiebbar an der Tragstruktur gelagert, insbesondere nach Art eines Schlittens. Geeignete Lagerungsmittel, beispielsweise mindestens eine Führungsschiene, können eine verschleißarme Verschiebelagerung der Halteeinheit bezüglich der Tragstruktur bewirken.

Eine vorteilhafte Ausführungsform der Adhäsions-Greifvorrichtung verfügt über zwei Greifeinheiten, die jeweils eine mit einem Löse-Umlenkelement bestückte Halteeinheit aufweisen, wobei die beiden Halteinheiten derart bewegungsmäßig miteinander synchronisiert sind, dass sie zum Hervorrufen der Lösebewegung der beiden von ihnen getragenen Löse-Umlenkelemente jeweils unter Ausführung einer Halteeinheitbewegung relativ zur Tragstruktur aufeinander zu bewegbar sind.

Als vorteilhafte Ausstattungsmaßnahme verfügt die Adhäsions-Greifvorrichtung bevorzugt über eine Objekt-Abstützeinrichtung, die geeignet ist, das zu ergreifende oder ergriffene Objekt abzustützen. Die unmittelbare Abstützwirkung wird durch mindesten ein dem Arbeitsbereich der Greifeinheit zugeordnetes Abstützelement der Objekt-Abstützeinrichtung hervorgerufen. Jedes Abstützelement hat eine Abstützfläche, die in die gleiche Richtung weist wie die Adhäsionsfläche an dem mindestens einen Greifabschnitt.

Das mindestens eine Abstützelement ist gemäß einer besonders kostengünstigen Ausführungsform ortsfest an der Tragstruktur angebracht. Bei einer funktionell besonders vorteilhaften Ausgestaltung ist das mindestens eine Abstützelement relativ zur Tragstruktur beweglich, sodass es diesbezüglich eine Hubbewegung ausführen kann, bei der es je nach Hubrichtung an den Arbeitsbereich heranfahrbar oder von dem Arbeitsbereich abrückbar ist. Die mit mindestens einem beweglichen Abstützelement ausgestattete Objekt-Abstützeinrichtung verfügt zweckmäßigerweise über eine zur Erzeugung der Hubbewegung ausgebildete Hub-Antriebeinrichtung, die vorzugsweise von einem durch Fluidkraft betätigbaren Typ ist, ohne weiteres aber auch elektrisch betätigbar ausgeführt sein kann.

Bevorzugt wird die Adhäsions-Greifvorrichtung zum Ergreifen eines Objektes mit dem mindestens einen Abstützelement voraus an das handzuhabende Objekt angesetzt. Ist das Abstützelement bewegbar ausgebildet, kann die Hubbewegung nach dem Ergreifen eines Objektes dazu genutzt werden, den Ablösevorgang des Objekts vom Greifabschnitt dadurch zu unterstützen, dass das Objekt von dem Greifabschnitt weggedrückt wird.

Die Objekt-Abstützeinrichtung kann insbesondere beim Greifvorgang bevorzugt auch als Niederhalter genutzt werden, der das zu ergreifende Objekt fixiert.

Die Objekt-Abstützeinrichtung kann auch dazu verwendet werden, das ergriffene Objekt abzustützen und in seiner festgehaltenen Position zu stabilisieren, bis es wieder abgelegt wird.

Das mindestens eine Abstützelement der Objekt-Abstützeinrichtung kann federnd nachgiebig aufgehängt sein, sodass es beim Ergreifen eines Objektes durch den Kontakt mit dem Objekt zurückdrückbar ist, bis der Greifabschnitt am Objekt anhaftet.

Die eingangs erwähnte Positioniervorrichtung, die in vorteilhafter Weise zur Handhabung der Adhäsions-Greifvorrichtung verwendbar ist, ist zweckmäßigerweise ein unmittelbarer Bestandteil der Handhabungsvorrichtung.

Nachfolgend wird die Erfindung anhand der beiliegenden Zeichnung näher erläutert. In dieser zeigen:
- Figur 1: eine schematische Darstellung einer bevorzugten Ausführungsform der erfindungsgemäßen Handhabungsvorrichtung, wobei eine nur schematisch illustrierte Adhäsions-Greifvorrichtung an einer zum Hervorrufen einer Handhabungsbewegung der AdhäsionsGreifvorrichtung geeigneten Positioniervorrichtung montiert ist,
- Figur 2: eine bevorzugte erste Ausführungsform der Adhäsions-Greifvorrichtung in einer Seitenansicht mit Blickrichtung gemäß Pfeil II aus Figur 3, wobei eine Betriebsphase beim Ergreifen eines umzupositionierenden Objektes gezeigt ist,
- Figur 3: die Adhäsions-Greifvorrichtung aus Figur 2 in einer Draufsicht in Blickrichtung gemäß Pfeil III aus Figur 2,
- Figur 4: die Adhäsions-Greifvorrichtung aus Figur 2 mit gleicher Blickrichtung wie in Figur 2 und ebenfalls in einer Betriebsphase beim Ergreifen eines Objektes,
- Figur 5: die Adhäsions-Greifvorrichtung der Figuren 2 bis 4 in einer Blickrichtung gemäß Pfeil II aus Figur 3 während einer Betriebsphase des Lösens eines zuvor ergriffenen und festgehaltenen Objekts,
- Figur 6: eine weitere Ausführungsform der AdhäsionsGreifvorrichtung in einer Seitenansicht mit Blickrichtung gemäß Pfeil VI aus Figur 7 in einer Betriebsphase vor dem Ergreifen eines Objektes, das auf einer Unterlage liegend illustriert ist,
- Figur 7: einen Schnitt durch die Adhäsions-Greifvorrichtung gemäß Schnittlinie VII-VII aus Figuren 6 und 11,
- Figur 8: einen weiteren Schnitt durch die Adhäsions-Greifvorrichtung gemäß Schnittlinie VIII-VIII aus Figuren 6 und 11,
- Figur 9: einen weiteren Schnitt durch die Adhäsions-Greifvorrichtung gemäß Schnittlinie IX-IX aus Figuren 6 und 11,
- Figur 10: einen weiteren Schnitt durch die Adhäsionsvorrichtung gemäß Schnittlinie X-X aus Figuren 6 und 11,
- Figur 11: einen weiteren Schnitt durch die AdhäsionGreifvorrichtung gemäß Schnittlinie XI-XI aus Figur 7,
- Figur 12: eine weitere Seitenansicht der Adhäsions-Greifvorrichtung gemäß Figuren 6 bis 11 mit einer Blickrichtung gemäß Pfeil XII-XII aus Figur 7, sodass die der Figur 6 entgegengesetzte Seite der Adhäsions-Greifvorrichtung erkennbar ist,
- Figur 13: in einer der Figur 11 entsprechenden Schnittdarstellung die Adhäsions-Greifvorrichtung in einer Betriebsphase des Ergreifens eines auf einer Unterlage bereitliegenden Objektes,
- Figur 14: die Anordnung aus Figur 13 in einer Blickrichtung gemäß Pfeil XII aus Figur 7,
- Figur 15: in einer den Figuren 11 und 13 entsprechenden Schnittdarstellung eine weitere Betriebsphase beim Ergreifen eines Objektes,
- Figur 16: die Anordnung aus Figur 15 in einer Seitenansicht mit Blickrichtung gemäß Pfeil XII aus Figur 7,
- Figur 17: in einer den Figuren 11, 13 und 15 entsprechenden Schnittdarstellung eine Betriebsphase der Adhäsions-Greifvorrichtung beim Lösen des zuvor ergriffenen Objektes, und
- Figur 18: die Anordnung aus Figur 17 in einer Seitenansicht mit Blickrichtung gemäß Pfeil XII-XII aus Figur 7.

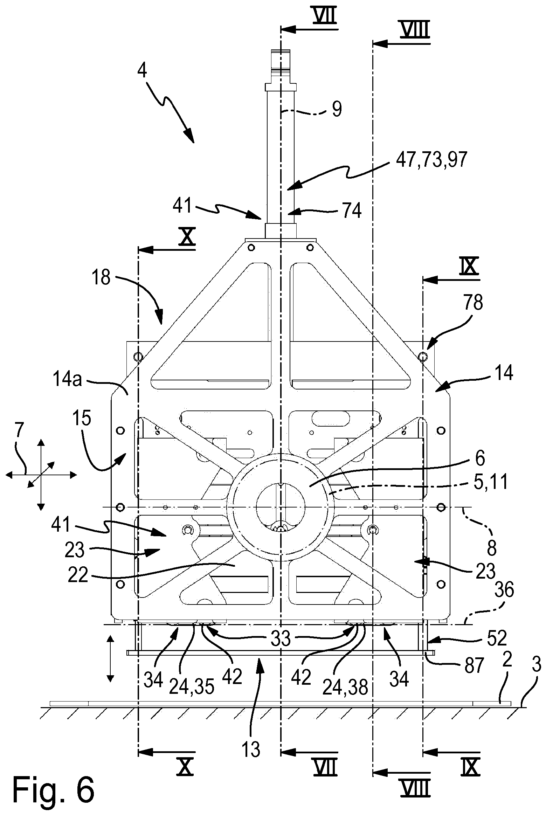

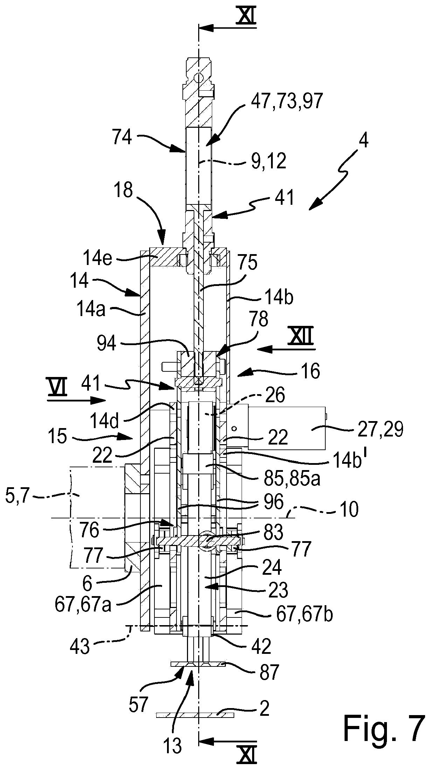

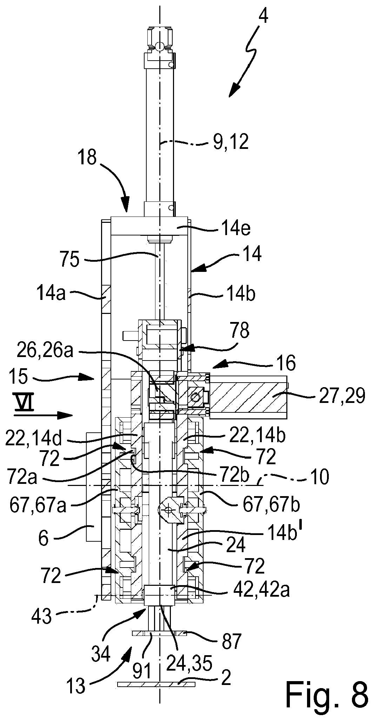

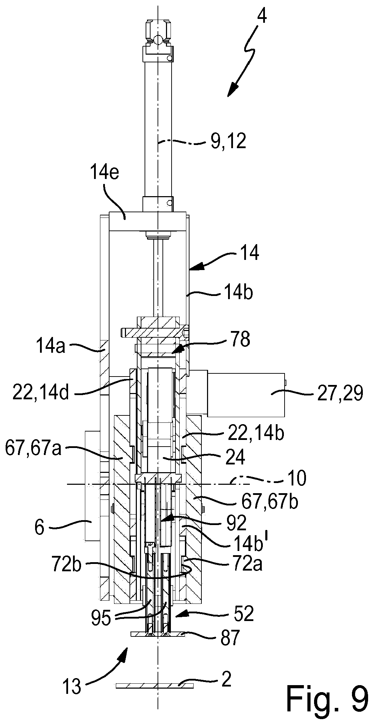

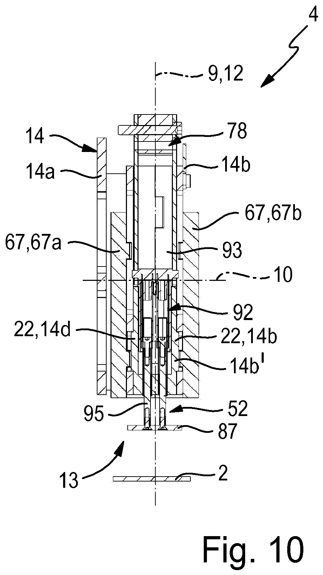

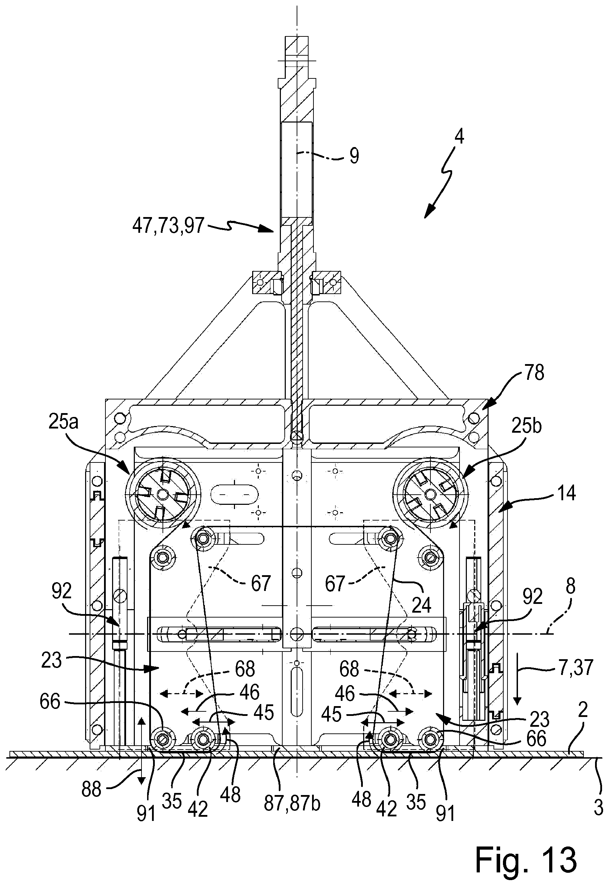

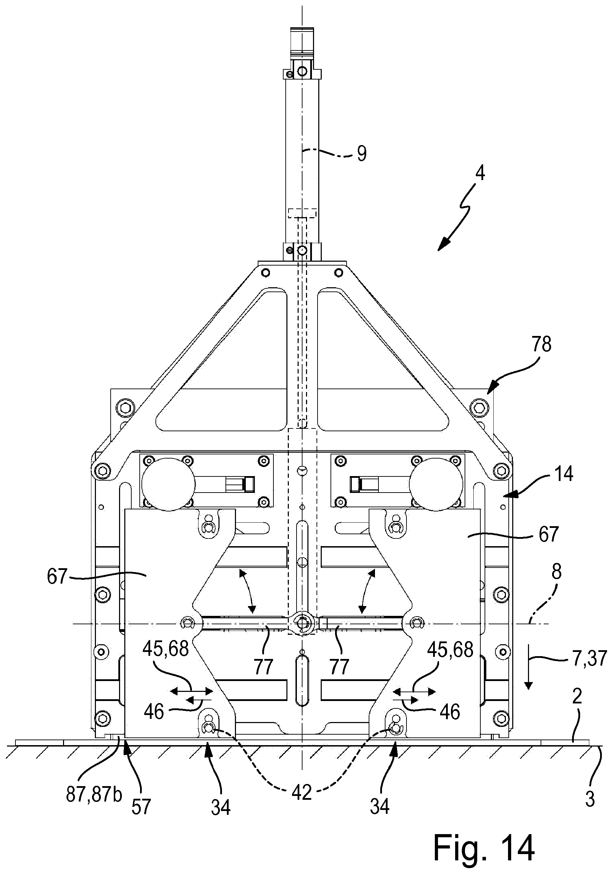

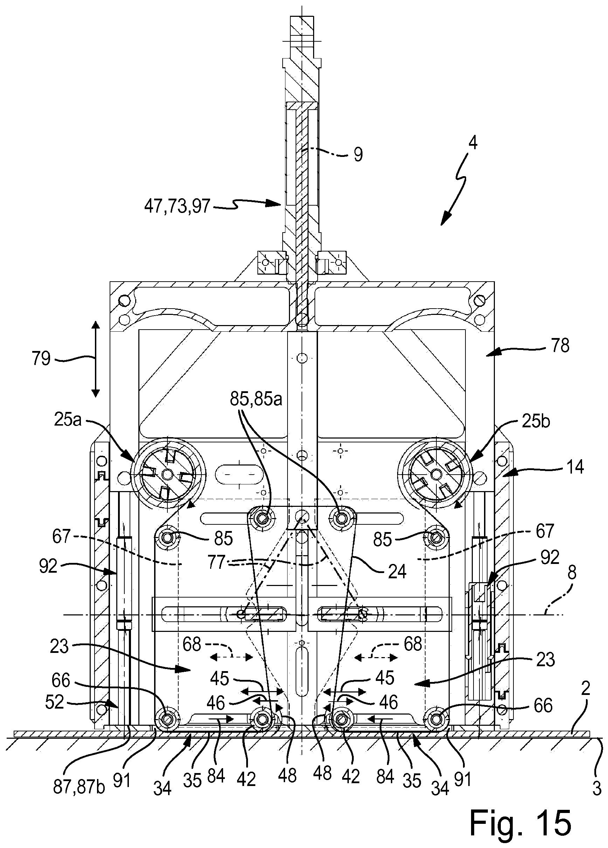

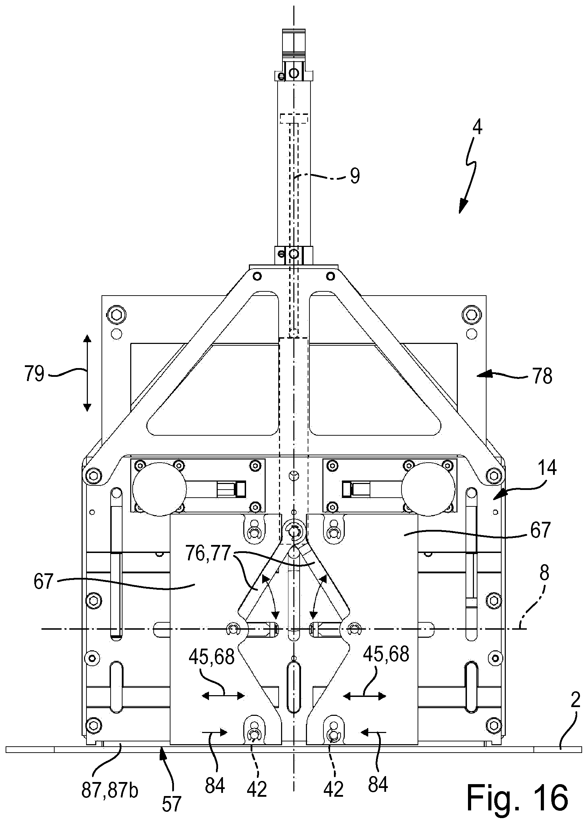

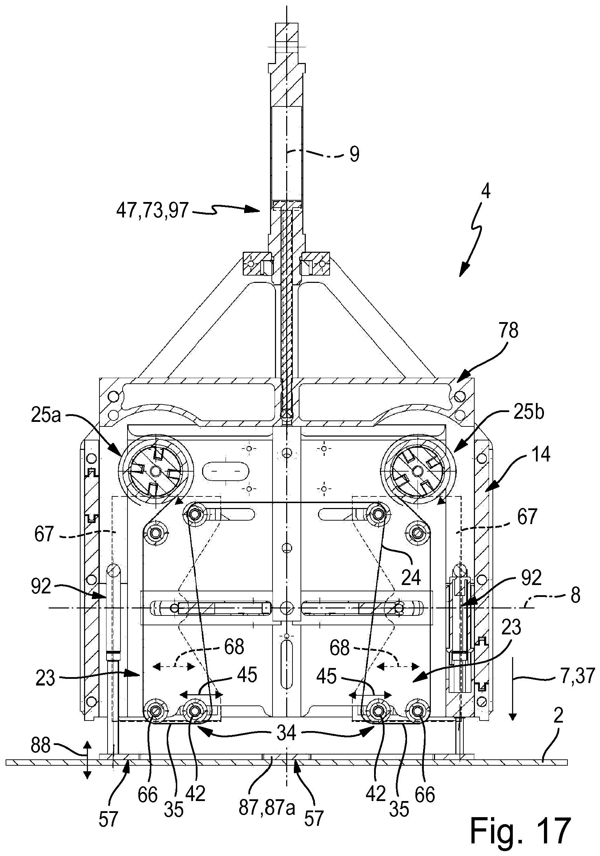

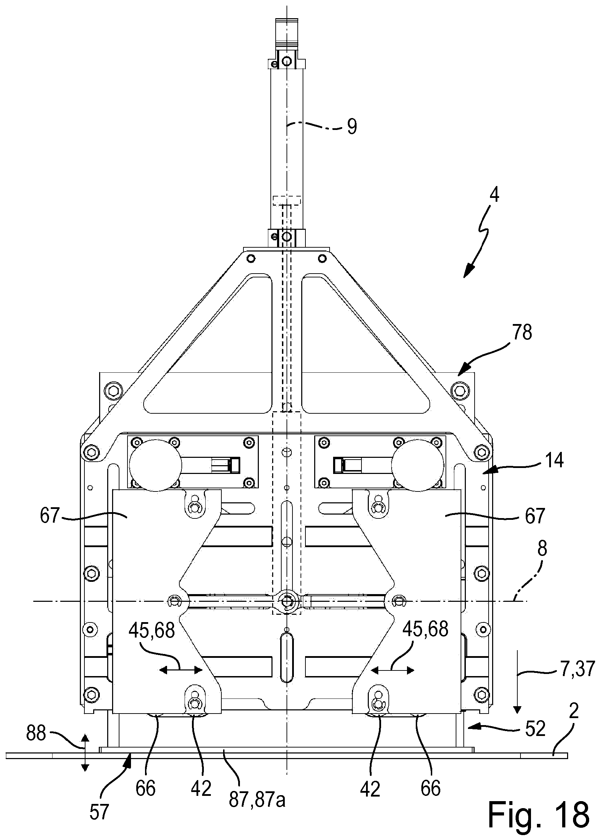

Bei der Durchführung eines Verfahrens zum Umpositionieren eines Objektes repräsentieren die Figuren 15 und 16 auch eine Betriebsphase, in der das Objekt ergriffen ist und durch Ausführung einer durch die Positioniervorrichtung hervorrufbaren Handhabungsbewegung umpositioniert werden kann. Die Figuren 13 und 14 repräsentieren gleichzeitig eine Betriebsphase beim Lösen des zuvor ergriffenen Objektes. Die Figuren 17 und 18 spiegeln gleichzeitig eine Betriebsphase beim Ergreifen eines Objektes wieder, die sich an die Betriebsphase der Figuren 6 bis 12 anschließt.

Nochmals zusammengefasst repräsentieren bei dem Ausführungsbeispiel der Figuren 6 bis 18 bei einem Zyklus zur Umpositionierung eines Objekts die Figuren 6 bis 12 eine erste Betriebsphase, die Figuren 17 und 18 eine darauffolgende zweite Betriebsphase, die Figuren 13 und 14 eine darauffolgende dritte Betriebsphase, die Figuren 15 und 16 eine darauffolgende dritte Betriebsphase, wiederum die Figuren 13 und 14 eine darauffolgende fünfte Betriebsphase, wiederum die Figuren 17 und 18 eine darauffolgende sechste Betriebsphase und schließlich erneut die Figuren 6 bis 12 eine abschließende siebte Betriebsphase.

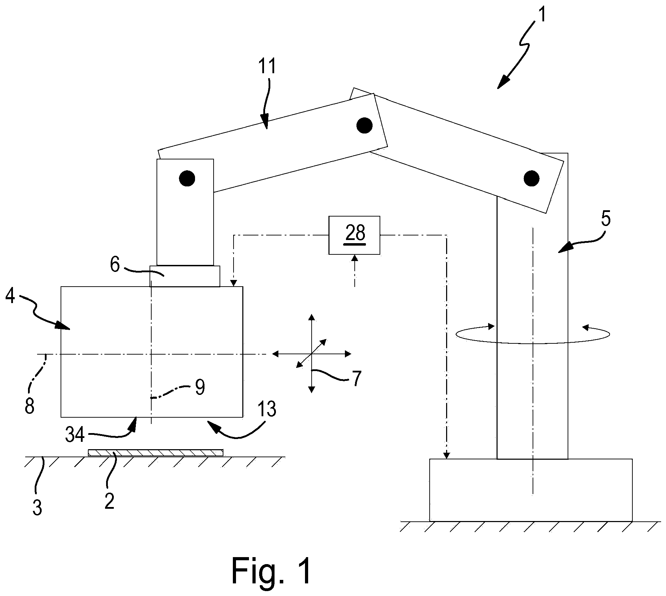

In der Figur 1 ist eine Handhabungsvorrichtung 1 gezeigt, die ausgebildet ist, um ein beliebiges Objekt 2 umzupositionieren. Unter dem Begriff "Umpositionieren" wird insbesondere verstanden, das Objekt 2 an einem Ausgangspunkt aufzunehmen und nach einer gewissen Verlagerung an einem Zielpunkt wieder abzulegen. In der Regel sind der Ausgangspunkt und der Zielpunkt zueinander beabstandet, sie können jedoch auch zusammenfallen. Ein am Ausgangspunkt aufgenommenes Objekt 2 kann beispielsweise nach einer Umorientierung an einem mit dem Ausgangspunkt übereinstimmenden Zielpunkt wieder abgelegt werden.

Das umzupositionierende Objekt 2 wird zweckmäßigerweise durch eine Bereitstellungsvorrichtung 3 zu seiner Umpositionierung bereitgestellt, bei der es sich im einfachsten Fall um eine Unterlage handelt, beispielsweise um einen Tisch, auf dem das Objekt 2 abgelegt ist. Die Bereitstellungsvorrichtung 3 kann ein Bestandteil der Handhabungsvorrichtung 1 sein.

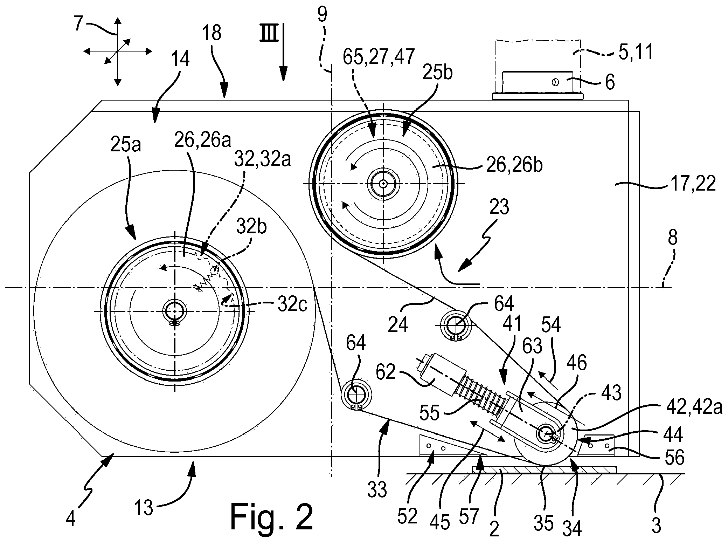

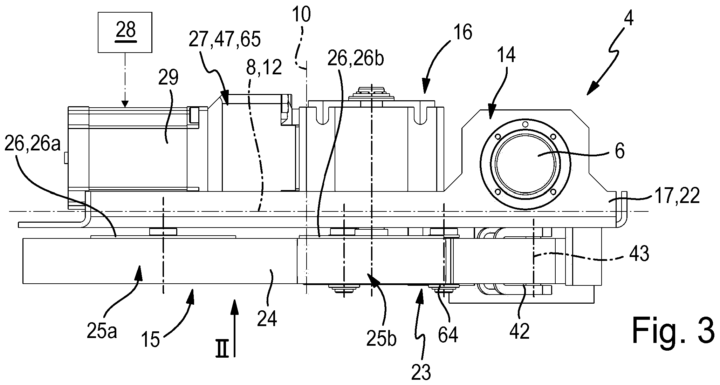

Als Hauptkomponente enthält die Handhabungsvorrichtung 1 eine Adhäsions-Greifvorrichtung 4. Sie ist in der Lage, das Objekt 2 zwecks eines Umpositioniervorganges zu ergreifen, festzuhalten und wieder loszulassen. Diese Adhäsions-Greifvorrichtung 4 ist in Figur 1 nur symbolisch abgebildet, vorteilhafte Ausführungsformen sind in den Figuren 2 bis 18 illustriert.

Bei ihrem bestimmungsgemäßen Gebrauch ist die Adhäsions-Greifvorrichtung 4 zweckmäßigerweise an einer Positioniervorrichtung 5 angebracht, die zweckmäßigerweise ebenfalls einen Bestandteil der Handhabungsvorrichtung 1 bildet. Die Adhäsions-Greifvorrichtung 4 hat eine Befestigungsschnittstelle 6, die beispielsweise als ein zur Schraubbefestigung geeigneter Befestigungsflansch ausgebildet ist und unter deren Mitwirkung die Adhäsions-Greifvorrichtung 4 an der Positioniervorrichtung 5 befestigbar oder befestigt ist, insbesondere in lösbarer Weise.

Die Positioniervorrichtung 5 ist bei dem illustrierten Ausführungsbeispiel von einem Roboter gebildet, der einen durch nicht weiter illustrierte motorische Antriebsmittel mit mehreren Bewegungs-Freiheitsgraden bewegbaren Roboterarm 11 hat, an dem die Adhäsions-Greifvorrichtung 4 mit ihrer Befestigungsschnittstelle 6 montiert ist. Die Positioniervorrichtung 5 ist beispielsweise elektrisch und/oder pneumatisch und/oder hydraulisch angetrieben. Abweichend von der Illustration kann die Positioniervorrichtung 3 beispielsweise auch einen portalartigen Aufbau haben.

Durch entsprechendes Betreiben der Positioniervorrichtung 5 kann die Adhäsions-Greifvorrichtung 4 zu einer schematisch durch Pfeile angedeuteten Handhabungsbewegung 7 angetrieben werden. Im Rahmen dieser Handhabungsbewegung 7 kann das schon erwähnte Umpositionieren eines Objektes 2 stattfinden. Die Handhabungsbewegung 7 ist bevorzugt eine dreidimensionale Bewegung, kann sich aber durchaus auch auf eine nur zweidimensionale oder nur eindimensionale Bewegung beschränken. Ohne weiteres sind auch noch rotative Bewegungsfreiheitsgrade möglich und insbesondere überlagerbar.

Die Adhäsions-Greifvorrichtung 4 hat eine imaginäre Hauptachse 8, die bei einer üblichen Betriebsweise der Handhabungsvorrichtung 1 horizontal orientiert ist. Die Adhäsions-Greifvorrichtung 4 hat außerdem eine zu der Hauptachse 8 senkrechte imaginäre Hochachse 9. Sie ist bei einer üblichen Betriebsweise der Handhabungsvorrichtung 1 vertikal ausgerichtet. Gemeinsam spannen die Hauptachse 8 und die Hochachse 9 eine Hauptebene 12 auf. Die Hauptebene 12 verläuft in den Figuren 2, 4, 5, 6 und 11 bis 18 parallel zur Zeichenebene.

Die Adhäsions-Greifvorrichtung 4 hat auch noch eine imaginäre Querachse 10, die senkrecht zu der Hauptebene 12 verläuft.

Zur Vereinfachung wird im Folgenden die Achsrichtung der Hauptachse 8 als Hauptrichtung 8, die Achsrichtung der Hochachse 9 als Höhenrichtung 9 und die Achsrichtung der Querachse 10 als Querrichtung 10 bezeichnet, wobei zur Vereinfachung jeweils übereinstimmende Bezugszeichen verwendet werden.

Die beiden einander entgegengesetzt in der Querrichtung 10 orientierten Seiten der Adhäsions-Greifvorrichtung 4 werden im Folgenden zur besseren Unterscheidung auch als Vorderseite 15 und als Rückseite 16 bezeichnet.

Ungeachtet ihrer Benennung geben die erwähnten Achsen 8, 9, 10 sowie die Richtungs- und Seitenangaben keine zwingende Ausrichtung der Adhäsions-Greifvorrichtung 4 während ihres Betriebes vor. Die Adhäsions-Greifvorrichtung 4 kann beispielsweise auch mit einer Ausrichtung genutzt werden, in der eine in der Zeichnung in der Höhenrichtung 9 nach unten weisende Unterseite 13 seitwärts und/oder nach oben orientiert ist.

Die vorliegende Beschreibung von Ausführungsbeispielen der Adhäsions-Greifvorrichtung 4 bezieht sich, sofern im Einzelfall keine abweichenden Angaben gemacht werden, auf alle illustrierten Ausführungsbeispiele.

Die Adhäsions-Greifvorrichtung 4 hat eine für ihre Stabilität verantwortliche Tragstruktur 14. Sie bildet praktisch ein Gestell der Adhäsions-Greifvorrichtung 4, an dem die relevanten Komponenten direkt oder indirekt angebracht sind. Die Befestigungsschnittstelle 6 befindet sich an der Tragstruktur 14. Die Tragstruktur 14 macht folglich die Handhabungsbewegung 7 stets unmittelbar mit.

Beim Ausführungsbeispiel der Figuren 2 bis 5 besteht die Tragstruktur 14 im Wesentlichen aus einer sich in der Hauptebene 12 erstreckenden Tragplatte 17.

Beim Ausführungsbeispiel der Figuren 6 bis 18 enthält die Tragstruktur 14 ein der Vorderseite 15 zugeordnetes vorderes Tragelement 14a, ein diesbezüglich in der Querrichtung 10 beabstandetes hinteres Tragelement 14b und zwei die Tragelemente 14a, 14b an den in der Hauptrichtung 8 orientierten Endbereichen miteinander verbindende Querelemente 14c. An der der Unterseite 13 entgegengesetzten Oberseite 18 der Adhäsions-Greifvorrichtung 4 sind die beiden Tragelemente 14a, 14b bevorzugt durch ein Jochelement 14e miteinander verbunden. Zwischen den beiden sich zumindest im Wesentlichen parallel zu der Hauptebene 12 erstreckenden vorderen und hinteren Tragelementen 14a, 14b befindet sich ein zu beiden Tragelementen 14a, 14b in der Querrichtung 10 beabstandeten Zwischenelement 14d der Tragstruktur 14, das beispielsweise an den beiden Querelementen 14c befestigt ist.

Die Tragstruktur 14 hat einen Tragabschnitt 22, der beim Ausführungsbeispiel der Figuren 2 bis 5 von der Tragplatte 17 gebildet ist. Bei dem Ausführungsbeispiel der Figuren 6 bis 18 besteht der Tragabschnitt 22 aus dem Zwischenelement 14d und einem dem Zwischenelement 14d in der Querrichtung 10 mit Abstand gegenüberliegenden Teilabschnitt 14b' des hinteren Tragelementes 14b.

Es versteht sich, dass der Tragabschnitt 22 ebenso wie die Tragstruktur 14 insgesamt auf andere konstruktive Weise realisiert werden können.

Die Befestigungsschnittstelle 6 befindet sich beim Ausführungsbeispiel der Figuren 2 bis 5 an der Tragplatte 17 im Bereich der Oberseite 18. Beim anderen Ausführungsbeispiel ist sie vorne außen an dem vorderen Tragelement 14a ausgebildet.

An der Tragstruktur 14 ist mindestens eine Greifeinheit 23 angeordnet. Beim Ausführungsbeispiel der Figuren 2 bis 5 trägt die Tragstruktur 14 nur eine einzige Greifeinheit 23.

Selbige ist dort an der Tragplatte 22 angeordnet, insbesondere im Bereich der Vorderseite 15.

Beim Ausführungsbeispiel der Figuren 6 bis 18 ist die Tragstruktur 14 mit mehreren Greifeinheiten 23 bestückt, wobei sie konkret zwei Greifeinheiten 23 aufweist. Beide Greifeinheiten sind bevorzugt an dem Tragabschnitt 22 angebracht. Die beiden Greifeinheiten 23 sind in der Hauptrichtung 8 nebeneinander angeordnet.

Jede Greifeinheit 23 enthält ein biegeflexibles, bevorzugt jedoch über eine hohe Zugfestigkeit verfügendes Adhäsionsband 24. Es besteht insbesondere aus einem Kunststoffmaterial und ist bevorzugt folienartig dünn.

Das Adhäsionsband 24 erstreckt sich zwischen zwei in der Hauptebene 12 zueinander beabstandeten ersten und zweiten Haltebereichen 25a, 25b, in denen es mit jeweils einem von zwei einander entgegengesetzten Bandendabschnitten an der Tragstruktur 14 fixiert ist, exemplarisch an dem Tragabschnitt 22.

Zweckmäßigerweise verfügt jede Greifeinheit 23 in jedem Haltebereich 25a, 25b über eine drehbar an der Tragstruktur 14 gelagerte Wickelrolle 26. Die Drehachsen der Wickelrollen verlaufen rechtwinkelig zur Hauptebene 12. Die im ersten Haltebereich 25a angeordnete Wickelrolle 26 ist als Abwickelrolle 26a konzipiert, auf der unverbrauchtes Adhäsionsband 24 aufgewickelt und bereitgestellt ist. Bei der im zweiten Haltebereich 25b angeordneten Wickelrolle 26 handelt es sich um eine Aufwickelrolle 26b, die in der Lage ist, verbrauchtes Adhäsionsband 24 in aufgewickelter Weise aufzunehmen.

Mittels einer an der Tragstruktur 14 angeordneten, zumindest auf die Aufwickelrolle 26b einwirkenden Bandtransport-Antriebseinrichtung 27 lässt sich das Adhäsionsband 24 von der Abwickelrolle 26a auf die Aufwickelrolle 26b nach und nach umspulen. Bevorzugt ist die Bandtransport-Antriebseinrichtung 27 derart durch eine bevorzugt als Bestandteil der Handhabungsvorrichtung 1 ausgebildete elektronische Steuereinrichtung 28 ansteuerbar, dass ein diskontinuierlicher Umspulvorgang stattfindet. Das Umspulen kann also getaktet in dem Maße stattfinden, in dem das Adhäsionsband 24 beim Betrieb der Adhäsions-Greifvorrichtung 4 einem längenabschnittsweisen Verbrauch beziehungsweise Verschleiß unterliegt.

Die Bandtransport-Antriebseinrichtung 27 ist zweckmäßigerweise auch mit der Abwickelrolle 26a betriebsmäßig verbunden, um beim Umspulvorgang ein kontrolliertes Nachführen zu ermöglichen und um zu gewährleisten, dass das Adhäsionsband 24 unter einer gewissen Anspannung gehalten wird.

Exemplarisch enthält die Bandtransport-Antriebseinrichtung 27 einen mit der Aufwickelrolle 26b antriebsmäßig verbundenen, bevorzugt elektrischen Antriebsmotor 29. Sie enthält außerdem bevorzugt eine antriebsmäßig mit der Abwickelrolle 26a gekoppelte, insbesondere elektrisch betätigbare Bremse 32. Der Antriebsmotor 29 und die Bremse 32 können in aufeinander abgestimmter Weise durch die elektronische Steuereinrichtung 28 angesteuert werden, um ein getaktetes Umspulen hervorzurufen und um außerhalb der Umspulvorgänge die gewünschte Bandspannung zu erhalten.

Die elektronische Steuereinrichtung 28 ist im Übrigen vorzugsweise auch dazu ausgebildet, die Positioniervorrichtung 5 zum Hervorrufen der für die Adhäsions-Greifvorrichtung 4 gewünschten Handhabungsbewegung 7 elektronisch anzusteuern. Die elektronische Steuereinrichtung 28 ist dazu an die Positioniervorrichtung 5 angeschlossen.

Das Ausführungsbeispiel der Figuren 2 bis 5 verdeutlicht, dass anstelle einer durch die Steuereinrichtung 28 beeinflussbaren Bremse 32 auch eine selbststätig arbeitende und ohne zuzuführende Steuersignale arbeitende Bremse 32 vorgesehen sein kann. Hierbei handelt es sich insbesondere um eine Rastbremse 32a, bei der ein federbelastetes Rastglied 32b mit einer an der Abwickelrolle 26a vorgesehenen Rastverzahnung 32c zusammenwirkt. Hier wird die Abwickelrolle 26a durch formschlüssiges Verrasten solange unverdrehbar festgehalten, bis mittels des Antriebsmotors 26b eine Zugkraft in das Adhäsionsband 24 eingeleitet wird, die ausreichend groß ist, um den Rastwiederstand zu überwinden.

Das Adhäsionsband 24 ist zumindest einseitig und bevorzugt ausschließlich einseitig mit einer eine lösbare Haftwirkung entfaltenden Adhäsionsfläche 33 versehen. Beispielsweise enthält das Adhäsionsband 24 ein Trägerband, das mit einer adhäsiv wirkenden, die Adhäsionsfläche 33 definierenden Adhäsionsschicht beschichtet ist. Bevorzugt ist das Adhäsionsband 24 ein Selbstklebeband, bei dem die Adhäsionsfläche 33 von einer Selbstklebefläche gebildet ist.

Jede Greifeinheit 23 hat einen Arbeitsbereich 34, durch den sich das biegeflexible Adhäsionsband 24 hindurch erstreckt. Der in dem Arbeitsbereich 34 verlaufende Längenabschnitt des Adhäsionsbandes wird zum Ergreifen und Festhalten des umzupositionierenden Objektes 2 genutzt und wird daher zur besseren Unterscheidung als Greifabschnitt 35 bezeichnet.

In dem Arbeitsbereich 34 ist das Adhäsionsband 24 so ausgebildet, dass der am Greifabschnitt 35 befindliche Abschnitt der Adhäsionsfläche 33 von der Adhäsions-Greifvorrichtung 4 wegweist. Bevorzugt und entsprechend der Ausführungsbeispiele befindet sich der Arbeitsbereich 34 im Bereich der Unterseite 13 der Adhäsions-Greifvorrichtung 4, wobei die Adhäsionsfläche 33 des Greifabschnittes 35 nach unten weist.

Entsprechend der Mehrfachausstattung mit Greifeinheiten 23 verfügt die Adhäsions-Greifvorrichtung der Figuren 6 bis 18 über mehrere, exemplarisch über zwei Arbeitsbereiche 34. Folglich ist auch eine entsprechende Anzahl von Greifabschnitten 35 vorhanden. Die mehreren Arbeitsbereiche 34 und somit auch die mehreren Greifabschnitte 35 sind bevorzugt in der Hauptrichtung 8 beabstandet zueinander angeordnet. Sie liegen zweckmäßigerweise bezogen auf die Höhenrichtung 9 auf gleicher Höhe in einer gemeinsamen, zu der Hochachse 9 rechtwinkeligen Arbeitsebene 36.

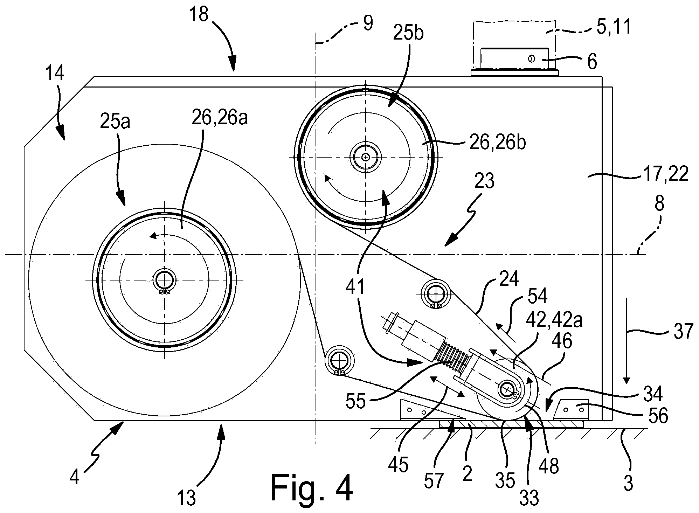

Um ein Objekt 2 zu ergreifen, kann die Adhäsions-Greifvorrichtung 4 durch die Handhabungsbewegung 7 gemäß Figuren 13, 14, 17 und 18 mit einer Ansetzbewegung 37 so an das Objekt 2 angesetzt werden, dass der Greifabschnitt 35 mit der daran ausgebildeten Adhäsionsfläche 33 am zu ergreifenden Objekt 2 zur Anlage gelangt. Wird anschließend die Adhäsions-Greifvorrichtung 4 durch eine weitere Handhabungsbewegung 7 verlagert, bleibt das Objekt 2 am Greifabschnitt 35 haften und macht die weitere Handhabungsbewegung 7 mit. Entsprechendes gilt für das Ausführungsbeispiel der Figuren 2 bis 5, wobei die Ansetzbewegung in Figur 4 illustriert ist.

Die Adhäsions-Greifvorrichtung 4 ist mit einer Löseeinrichtung 41 ausgestattet, mit deren Hilfe sich der Greifabschnitt 35 von dem durch ihn festgehaltenen Objekt 2 bei Bedarf wieder lösen lässt, um das Objekt 2 am gewünschten Zielpunkt des Handhabungsvorganges wieder abzulegen.

Zu der Löseeinrichtung 41 gehört mindestens ein im Arbeitsbereich 34 der Greifeinheit 23 angeordnetes, von dem Adhäsionsband 24 partiell umschlungenes Löse-Umlenkelement 42. Den illustrierten Ausführungsbeispielen ist gemeinsam, dass jedem Arbeitsbereich 34 nur ein solches Löse-Umlenkelement 42 zugeordnet ist.

Das Löse-Umlenkelement 42 ist zweckmäßigerweise von einer Umlenkrolle 42a gebildet, die derart drehbar gelagert ist, dass sie um eine zu der Hauptebene 12 rechtwinkelige Drehachse 43 relativ zur Tragstruktur 14 drehbar ist. Die Drehachse 43 fällt mit der Längsachse der Umlenkrolle 42a zusammen. Bevorzugt ist die das Löse-Umlenkelement 42 bildende Umlenkrolle 42a frei drehbar gelagert.

Die bezüglich der Drehachse 43 radial nach außen weisende Umfangsfläche der Umlenkrolle 42a bildet eine bogenförmig gekrümmte Umlenkfläche 44, um die das Adhäsionsband 24 herumgeschlungen ist. Die konkret umschlungene Bogenlänge der Umlenkfläche 44 beträgt zweckmäßigerweise weniger als 180 Grad. Bei dem Ausführungsbeispiel der Figuren 2 bis 5 liegt die Bogenlänge bei etwa 150 Grad, beim Ausführungsbeispiel der Figuren 6 bis 18 bei etwa 100 Grad.

Wenn unter Verwendung der Bandtransport-Antriebseinrichtung 27 ein Umspulvorgang stattfindet, wälzt sich das Löse-Umlenkelement 42 an der der Adhäsionsfläche 33 entgegengesetzten Rückfläche des vorbeilaufenden Adhäsionsbandes 24 ab.

Bei einem nicht gezeigten Ausführungsbeispiel ist das Löse-Umlenkelement 38 unverdrehbar ausgebildet, wobei die Umlenkfläche 44 als Gleitfläche fungiert, an der das Adhäsionsband 24 bei dem erwähnten Umspulvorgang abgleitet. Das Löse-Umlenkelement 38 kann hier beispielsweise ein Umlenkklotz oder eine Umlenkstange sein.

Ungeachtet seiner konkreten Realisierung ist das Löse-Umlenkelement 42 derart in die Adhäsions-Greifvorrichtung 4 integriert, dass es in der Hauptebene 12 relativ zur Tragstruktur 14 translatorisch hin und her bewegbar ist. Bei dieser in der Zeichnung durch einen Doppelpfeil illustrierten, als Umlenkelementbewegung 45 bezeichneten Relativbewegung handelt es sich vorzugsweise um eine Linearbewegung. Gemäß einem nicht illustrierten Ausführungsbeispiel kann die translatorische Umlenkelementbewegung 45 eine nicht lineare Bewegung sein, beispielsweise eine einem Bogen, insbesondere einem Kreisbogen folgende Bewegung. Bei der Umlenkelementbewegung 45 ändert das Löse-Umlenkelement 42 insgesamt seine bezüglich der Tragstruktur 14 eingenommene Relativposition.

Die Umlenkelementbewegung 45 umfasst eine in der Zeichnung durch einen Pfeil angedeutete Lösebewegung 46, die entsprechend der Umlenkelementbewegung 45 einer geradlinigen oder einer nicht linearen, beispielsweise gekrümmten Bahn folgt. Diese Lösebewegung 46 ist für das Ablösen des ergriffenen Objektes 2 vom Greifabschnitt 35 bedeutsam.

Die Löseeinrichtung 41 enthält des Weiteren eine an der Tragstruktur angeordnete Löse-Antriebseinrichtung 47. Sie ist in der Lage, eine in den Figuren 4, 5, 11, 13 und 15 durch Pfeile illustrierte Umlaufbewegung 48 des Greifabschnittes 35 des Adhäsionsbandes 24 um das zugeordnete Löse-Umlenkelement 42 herum hervorzurufen und in diesem Zusammenhang gleichzeitig auch die bezüglich der Tragstruktur 14 translatorische Lösebewegung 46 des Löse-Umlenkelementes 42 hervorzurufen. Dieser im Folgenden auch als "Löseaktion" bezeichnete Vorgang bewirkt ein aktives Abziehen des Greifabschnittes 35 von dem daran anhaftenden Objekt 2, sodass das Objekt 2 von der Adhäsions-Greifvorrichtung 4 ganz oder teilweise abgelöst wird.

Der mit der Löseaktion verbundene Abziehvorgang muss sich nicht auf die gesamte Länge des am Objekt 2 anhaftenden Greifabschnittes 35 beziehen. Das vollständige Abziehen kann zwar durchaus der Fall sein und tritt exemplarisch beim Ausführungsbeispiel der Figuren 2 bis 5 auf. Der Abziehvorgang kann allerdings auch derart stattfinden, dass nach der Umlaufbewegung 48 und der damit einhergehenden Lösebewegung 46 noch ein Restbereich der ursprünglichen Fläche des Greifabschnittes am Objekt 2 haften bleibt, sodass sich noch eine zusätzliche abschließende Lösemaßnahme anzuschließen hat, um das Objekt 2 vollständig von dem in seiner wirksamen Fläche reduzierten Greifabschnitt 35 zu entfernen. Diese abschließende Lösemaßnahme besteht insbesondere in einem Wegdrücken des anhaftenden Objekts 2 von der Adhäsionsfläche 33 des Greifabschnittes 35. Bei entsprechendem Gewicht des Objekts 2 kann dies allein schwerkraftbedingt erfolgen, wenn das Objekt 2 bei der Löseaktion die Möglichkeit hat, nach unten abzufallen. Alternativ kann die Adhäsions-Greifvorrichtung 4 mit einer Objekt-Abstützeinrichtung 52 ausgestattet sein, die so an dem festgehaltenen Objekt 2 abstützbar ist, dass selbiges von dem Greifabschnitt 35 aktiv weggedrückt wird. Diese Objekt-Abstützeinrichtung 52 bildet dann einen Bestandteil der Löseeinrichtung 41.

Das Ausführungsbeispiel der Figuren 2 bis 5 verdeutlicht die vorteilhafte Möglichkeit, die Löse-Antriebseinrichtung 47 so auszubilden, dass durch sie eine die Lösebewegung 46 des Löse-Umlenkelementes 42 hervorrufende Zugkraft 54 in das Adhäsionsband 24 einleitbar ist.

Die Löse-Antriebseinrichtung 47 ist hier von der Bandtransport-Antriebseinrichtung 27 gebildet, sodass zu ihr der weiter oben schon erwähnte Antriebsmotor 29 und die Bremse 32 gehören. Zum Einleiten der Zugkraft 54 in das Adhäsionsband 24 ist die Aufwickelrolle 26b durch den Antriebsmotor 29 im Aufwickelsinne rotativ antreibbar, während gleichzeitig die Abwickelrolle 26a mittels der Bremse 32 blockierbar ist, sodass kein Adhäsionsband 24 nachfolgen kann. Die Folge ist eine Verkürzung des sich zwischen den beiden Wickelrollen 26 erstreckenden Längenabschnittes des Adhäsionsbandes 24 mit der Folge, dass der um das Löse-Umlenkelement 42 herumgeschlungene Bereich des Greifabschnittes 35 das Löse-Umlenkelement 42 aus dem Arbeitsbereich 34 zurück verdrängt, sodass das Adhäsionsband 24 vom Objekt 2 abgezogen und insbesondere abgeschält wird.

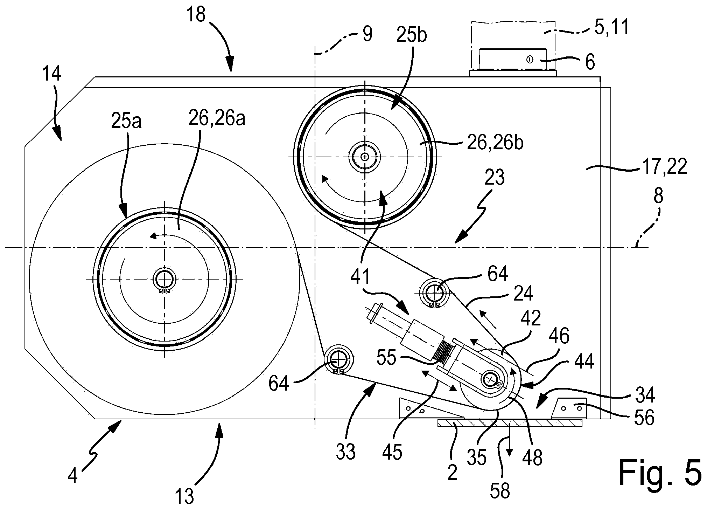

Zu Ermöglichung dieser Funktionalität ist es vorteilhaft, wenn das Löse-Umlenkelement 42 durch eine Federeinrichtung 55 mittels Federkraft in eine aus Figuren 2 und 4 ersichtliche Greifstellung vorgespannt ist, in der der um das Löse-Umlenkelement 42 herumgeschlungene Greifabschnitt 35 in der Lage ist, mit dem im Arbeitsbereich 34 positionierten Objekt 2 anhaftend in Kontakt zu treten. Bei der Löseaktion kann durch Aktivierung der Löse-Antriebseinrichtung 47 das Löse-Umlenkelement 42 unter Überwindung der Federkraft der Federeinrichtung 55 in eine aus Figur 5 ersichtliche, vom Objekt 2 abgehobene Lösestellung zurückgedrückt werden.

Die Löse-Antriebseinrichtung 47 ist bei einem nicht illustrierten Ausführungsbeispiel gesondert und unabhängig von der Bandtransport-Antriebseinrichtung 27 ausgebildet.

Die Adhäsions-Greifvorrichtung 4 gemäß Figuren 2 bis 5 hat eine in dem Arbeitsbereich 34 angeordnete Objekt-Abstützeinrichtung 52 mit einem oder mehreren stationär an der Tragstruktur 14 angeordneten Abstützelementen 56. Das mindestens eine Abstützelement 56 flankiert oder umrahmt den Arbeitsbereich 34 und hat eine in die gleiche Richtung wie die Adhäsionsfläche 33 des Greifabschnittes 35 weisende Abstützfläche 57 für das Objekt 2. Im ergriffenen und festgehaltenen Zustand liegt das Objekt an der Abstützfläche 57 an. Wenn bei der Löseaktion der mit der Zugkraft 54 beaufschlagte Greifabschnitt 35 zusammen mit dem Löse-Umlenkelement 42 bezüglich der Ebene der Abstützfläche 57 zurückgedrängt wird, wird das Objekt 2 durch das mindestens eine Abstützelement 56 zurückgehalten, sodass eine Trennung der Haftverbindung stattfindet. In der Folge kann das nicht mehr festgehaltene Objekt 2 gemäß Pfeil 58 in Figur 5 nach unten fallen oder abgelegt werden.

Die mindestens eine Abstützfläche 57 ist zweckmäßigerweise in der Höhenrichtung 9 nach unten orientiert. Dementsprechend verläuft die Lösebewegung 46 entgegengesetzt in Richtung zur Oberseite 18. Bei einem nicht gezeigten Ausführungsbeispiel ist die Umlenkelementbewegung 45 und somit auch die Lösebewegung 46 exakt in der Höhenrichtung 9 orientiert. Vorteilhafter ist es jedoch, wenn sie entsprechend des illustrierten Ausführungsbeispiels in der Hauptebene 12 liegend geneigt bezüglich der Hochachse 9 verläuft.

Die bewegliche Lagerung des Löse-Umlenkelementes 42 ist beim Ausführungsbeispiel der Figuren 2 bis 5 bevorzugt dadurch realisiert, dass an der Tragstruktur 14 ein Lagerelement 62 angebracht ist, das von einem Schaft eines das Löse-Umlenkelements 42 tragenden Umlenkelementträgers 63 gleitverschieblich durchsetzt ist, wobei zwischen den Umlenkelementträger 63 und das Lagerelement 62 eine als Druckfeder ausgebildete Federeinrichtung 55 eingegliedert ist.

Um einen günstigen Verlauf für das sich in der Hauptebene 12 erstreckende Adhäsionsband 24 zu erzielen, können an der Tragstruktur 14 weitere, beispielsweise von Umlenkrollen oder von Umlenkstäben gebildete Umlenkelemente 64 vorhanden sein.

Für jede Greifeinheit 23 gilt, dass in den Bandverlauf des Adhäsionsbandes 24 zwischen den beiden Haltebereichen 25a, 25b eine nicht weiter abgebildete Bandwendeeinrichtung eingeschaltet sein kann, durch die das Adhäsionsband 24 bezüglich seiner Längsachse um 180 Grad gewendet wird, um zu verhindern, dass es mit seiner Adhäsionsfläche 33 mit irgendwelchen Umlenkelementen in Kontakt gelangt.

Die Adhäsions-Greifvorrichtung 4 der Figuren 2 bis 5 ist insbesondere so ausgebildet, dass das Löse-Umlenkelement 42 im unbetätigten Zustand durch die Federeinrichtung 55 in eine aus Figur 2 ersichtliche Greifstellung vorgespannt ist, in der es zusammen mit dem sie umschlingenden Greifabschnitt 35 partiell über die Abstützfläche 57 hinaus vorsteht. Dies hat zur Folge, dass bei der Ansetzbewegung 37 der Greifabschnitt 35 mit dem Objekt 2 in Kontakt gelangt, bevor selbiges an der Abstützfläche 57 anliegt. Bevorzugt wird nun in einem weiteren Verfahrensschritt die Ansetzbewegung 37 fortgesetzt, bis das seinerseits durch die Bereitstellungsvorrichtung 3 abgestützte Objekt 2 an der Abstützfläche 57 anliegt, wobei bei diesem Vorgang das Löse-Umlenkelement 42 unter Ausführung der Umlenkelementbewegung 45 in eine weitere Greifstellung zurückgedrückt wird. Dieser Vorgang wird zweckmäßigerweise mit einem gleichzeitigen Nachspannen des Adhäsionsbandes 24 durch Betätigung der Löse-Antriebseinrichtung 47 kombiniert, sodass das Löse-Umlenkelement 42 diese weitere Greifstellung auch dann beibehält, wenn in einer darauffolgenden Betriebsphase das Objekt 2 zusammen mit der Adhäsions-Greifvorrichtung 4 von der Bereitstellungsvorrichtung 3 abgehoben wird. Dieser Betriebszustand ist in Figur 4 gezeigt.

Soll das Objekt 2 abgelegt werden, wird gemäß Figur 5 die schon beschriebene Löseaktion gestartet, wobei das Löse-Umlenkelement 42 unter kompletter Abhebung vom durch die Objekt-Abstützeinrichtung 52 zurückgehaltenen Objekt 2 in die Lösestellung gemäß Figur 5 gedrückt wird.

Die Adhäsions-Greifvorrichtung 4 kann so ausgebildet sein, dass das Löse-Umlenkelement 42 im durch den Greifabschnitt 35 festgehaltenen Zustand eines Objektes 2 von dem Greifabschnitt 35 des Adhäsionsbandes 24 abrückbar ist und erst zur Ausführung einer Löseaktion wieder an den Greifabschnitt 35 angelegt wird. Bevorzugt ist allerdings die illustrierte Bauform, bei der das Löse-Umlenkelement 42 in ständigem Kontakt mit dem Greifabschnitt 35 steht.

Um die Adhäsions-Greifvorrichtung 4 anschließend für einen erneuten Greifvorgang vorzubereiten, ist die Löse-Antriebseinrichtung 47 derart betätigbar, dass die Zugkraft 54 reduziert oder gänzlich aufgehoben wird, sodass das Löse-Umlenkelement 42 zusammen mit dem es umschlingenden Greifabschnitt 35 in der der Lösebewegung 46 entgegengesetzten Richtung in die anfängliche Greifstellung zurückbewegbar ist.

Insofern ist bei dem Ausführungsbeispiel der Figuren 2 bis 5 die Löse-Antriebseinrichtung 47 Bestandteil einer Greifvorrichtung-Antriebseinrichtung 65, durch die nicht nur die Bewegungen für den Lösevorgang, sondern auch mit dem Greifvorgang zusammenhängende Bewegungen der Komponenten der Adhäsions-Greifvorrichtung 4 hervorrufbar sind.

Während bei dem Ausführungsbeispiel der Figuren 2 bis 5 die Greifeinheit 23 in ihrem Arbeitsbereich 34 mit dem Löse-Umlenkelement 42 nur ein einziges Umlenkelement für das Adhäsionsband 24 aufweist, um das sich der Greifabschnitt 35 mit einem gekrümmten Längsverlauf herumerstreckt, zeigen die Figuren 6 bis 18 ein Ausführungsbeispiel, bei dem mindestens eine und bevorzugt jede Greifeinheit 23 in ihrem Arbeitsbereich 34 zusätzlich zu dem Löse-Umlenkelement 42 ein weiteres Umlenkelement 66 aufweist. Das weitere Umlenkelement 66 liegt wie das Löse-Umlenkelement 42 in der Hauptebene 12, wobei es zu dem Löse-Umlenkelement 42 beabstandet ist. Es ist von dem Adhäsionsband 24 ebenso wie das Löse-Umlenkelement 42 partiell umschlungen. Somit erstreckt sich der Greifabschnitt 35 im zugeordneten Arbeitsbereich 34 mit einem insbesondere linearen Längsverlauf zwischen dem Löse-Umlenkelement 42 und dem weiteren Umlenkelement 66.

Das weitere Umlenkelement 66 kann unverdrehbar ausgebildet sein und eine Umlenkfläche haben, an der das Adhäsionsband 24 mit seiner Rückfläche gleitverschieblich anliegt. Bevorzugt wird allerdings die beim illustrierten Ausführungsbeispiel realisierte Lösung, bei der auch das weitere Umlenkelement 66 als eine Umlenkrolle 66a ausgebildet ist, die um eine zu der Hauptebene 12 rechtwinkelige Drehachse relativ zur Tragstruktur 14 drehbar ist. Die Drehachse fällt mit der Längsachse der Umlenkrolle 66a zusammen. Die das weitere Umlenkelement 66 bildende Umlenkrolle 66a hat zweckmäßigerweise keinen Antrieb und ist frei drehbar ausgeführt.

Das Löse-Umlenkelement 42 und das weitere Umlenkelement 66 sind bevorzugt so ausgebildet und angeordnet, dass der sich zwischen ihnen erstreckende Greifabschnitt 35 in der weiter oben schon angesprochenen Arbeitsebene 36 verläuft. Bevorzugt erstrecken sich die über einen linearen Längsverlauf verfügenden Greifabschnitte 35 sämtlicher Arbeitsbereiche 34 in einer gemeinsamen Arbeitsebene 36. Sie liegen also bezogen auf die Höhenrichtung 9 auf gleicher Höhe der Adhäsions-Greifvorrichtung 4.

Während allerdings das Löse-Umlenkelement 42 in der Lage ist, eine relativ zur Tragstruktur 14 translatorische, hin- und hergehende Umlenkelementbewegung 45 auszuführen, ist das weitere Umlenkelement 66 zweckmäßigerweise ortsfest und folglich stationär bezüglich der Tragstruktur 14 angeordnet. Die Umlenkelementbewegung 45 des Löse-Umlenkelementes 42 äußert sich daher je nach Bewegungsrichtung entweder in einem sich Annähern an das weitere Umlenkelement 66 oder in einem sich Entfernen von dem weiteren Umlenkelement 66. Dabei bildet die Annäherungsbewegung die Lösebewegung 46.

Die Umlenkelementbewegung 45 ist exemplarisch eine Linearbewegung in der Hauptrichtung 8.

Eine maximal an das weitere Umlenkelement 66 angenäherte Stellung des Löse-Umlenkelements 42 wird im Folgenden als Lösestellung bezeichnet, die vom weiteren Umlenkelement 66 maximal entfernte Stellung des Löse-Umlenkelements 42 als Greifstellung. Bei einer Ausführung als Umlenkrolle 42a verläuft die Umlenkelementbewegung 45 bei allen Ausführungsbeispiel rechtwinkelig zur Drehachse 43 der Umlenkrolle 42a.

Gemäß einem nicht illustrierten Ausführungsbeispiel sind die mehreren Greifeinheiten 23 der Adhäsions-Greifvorrichtung 4 unabhängig voneinander ausgebildet und verfügen jeweils über ein eigenes Adhäsionsband 24. In jeder dieser voneinander unabhängigen Greifeinheiten 23 verläuft das Adhäsionsband 24 zwischen zwei der jeweiligen Greifeinheit 23 individuell zugeordneten Haltebereichen 25a, 25b, die bevorzugt in der geschilderten Weise mit Wickelrollen 26 ausgestattet sind. Eine auf dieser Basis aufgebaute Adhäsions-Greifvorrichtung 4 kann beispielsweise mehrere Greifabschnitte 35 der anhand der Figuren 2 bis 5 beschriebenen Art aufweisen.

Auch wenn die Greifeinheiten 23 entsprechend des Ausführungsbeispiels der Figuren 6 bis 18 jeweils über mehrere dem Arbeitsbereich 34 zugeordnete Umlenkelemente 42, 66 verfügen, ist die voneinander unabhängige Ausgestaltung der mehreren Greifeinheiten 23 möglich. Im Unterschied zu dem Konstruktionsprinzip der Figuren 2 bis 5 ist hier die beim Greifvorgang wirksame Adhäsionsfläche 33 jedoch betragsmäßig um einiges größer, sodass sich höhere Haltekräfte übertragen lassen.

Gemäß dem Ausführungsbeispiel der Figuren 6 bis 18 kann jedes Löse-Umlenkelement 42 ortsfest an einer bezüglich der Tragstruktur 14 gesonderten Halteeinheit 67 angeordnet oder ausgebildet sein, wobei die Halteeinheit 67 relativ zur Tragstruktur 14 bewegbar ist, um synchron die Umlenkelementbewegung 45 zu erzeugen. Jede Halteeinheit 67 kann relativ zur Tragstruktur 14 eine durch einen Doppelpfeil angedeutete, hin- und hergehende Halteeinheitbewegung 68 ausführen, deren Länge und Richtung unmittelbar die Länge und Richtung der Umlenkelementbewegung 45 des an der Halteeinheit 67 sitzenden Löse-Umlenkelements 42 vorgibt.

Jede Greifeinheit 23 hat ihre eigene Halteeinheit 67, die das zugeordnete Löse-Umlenkelement 42 trägt.

Zweckmäßigerweise ist jede Halteeinheit 67 in einer die Ausführung der Halteeinheitbewegung 68 ermöglichenden Weise an der Tragstruktur 14 bewegbar gelagert. Entsprechende Lagerungsmittel sind in der Zeichnung bei 72 erkennbar und definieren exemplarisch eine Linearführung. Mindestens ein an der Halteeinheit 67 ausgebildeter Lagerungsvorsprung 72a taucht in einer in der Hauptrichtung 8 verschiebbaren und in der Höhenrichtung 9 abgestützten Weise in eine Lagerungsnut 72b der Tragstruktur 14 ein. Hierbei kann wahlweise eine Gleitlagerung oder eine Wälzlagerung verwirklicht sein.

Die beiden Halteeinheiten 67 liegen sich in der Hauptrichtung 8 gegenüber, sodass sie durch ihre Haupteinheitbewegungen 68 in der Hauptrichtung 8 aneinander annäherbar oder voneinander entfernbar sind.

Beispielhaft enthält jede Halteeinheit 67 zwei in der Querrichtung 10 beabstandet zueinander angeordnete, durch geeignete Verbindungsmittel fest miteinander verbundene Haltelemente 67a, 67b. Diese Halteelemente 67a, 67b sind zweckmäßigerweise plattenförmig ausgebildet und mit zur Hauptebene 12 paralleler Plattenebene ausgerichtet. Das jeweils eine Halteelement 67a ist über die Lagerungsmittel 72 an der dem vorderen Tragelement 14a zugewandten Vorderseite des Zwischenelementes 14b gelagert. Das jeweils andere Halteelement 47b ist an dem dem Zwischenelement 14d gegenüberliegenden Teilabschnitt 14b' des hinteren Tragelementes 14b an dessen dem vorderen Tragelement 14a entgegengesetzter Rückseite gelagert. Jedes Löse-Umlenkelement 42 sitzt zwischen den beiden Halteelementen 67a, 67b und ist zweckmäßigerweise gleichzeitig an beiden Halteelementen 67a, 67b gehalten oder gelagert.

Die weiteren Umlenkelemente 66 überbrücken auch den zwischen den beiden Halteelementen 67a, 67b definierten Abstand, sind jedoch jeweils an dem Zwischenelement 14d und dem diesbezüglich gegenüberliegenden Teilabschnitt 14b' des hinteren Tragelementes 14b angebracht.

Eine Greifvorrichtung-Antriebseinrichtung, die zur Unterscheidung von derjenigen des Ausführungsbeispiels der Figuren 2 bis 5 mit dem Bezugszeichen 73 versehen ist, ist an der Tragstruktur 14 angebracht und derart antriebsmäßig mit den Halteeinheiten 67 gekoppelt, dass sie deren Halteeinheitbewegungen 68 und folglich auch die Umlenkelementbewegungen 45 der an den Halteeinheiten 67 angeordneten Löse-Umlenkelemente 42 hervorrufen kann.

Die Greifvorrichtung-Antriebseinrichtung 73 hat bevorzugt eine elektrisch und/oder durch Fluidkraft betätigbare Antriebseinheit 74, die beim Ausführungsbeispiel von einem mit Druckluft betriebenen Pneumatikzylinder gebildet ist. Die Antriebseinheit 74 ist an der Tragstruktur 14 befestigt, exemplarisch im Bereich der Oberseite 18 an dem Jochelement 14e.

Die Antriebseinheit 74 ist ansteuerungstechnisch mit der elektronischen Steuereinrichtung 28 verbunden, durch die sie betriebsmäßig ansteuerbar ist. Bei einer fluidbetätigen Antriebseinheit 74 ist zwischen die Steuereinrichtung 28 und die Antriebseinheit 74 eine nicht weiter illustrierte Steuerventileinrichtung eingeschaltet.

Die Antriebseinheit 74 hat ein elektrisch oder durch Fluidkraft relativ zur Tragstruktur 14 bewegliches Abtriebsglied 75. Exemplarisch enthält es eine in der Höhenrichtung 9 nach unten ragende, an einem Kolben befestigte Kolbenstange, wobei der Kolben in einem Zylindergehäuse der Antriebseinrichtung verschiebbar aufgenommen ist. Der Kolben ist zur Erzeugung der Abtriebsbewegung 82 gesteuert mit Druckluft beaufschlagbar. Die Ansteuerung übernimmt die elektronische Steuereinrichtung 28.

Das Abtriebsglied 75 ist über ein Koppelgetriebe 76 mit den beiden Halteeinheiten 67 antriebsmäßig gekoppelt, das bevorzugt in dem Bereich zwischen den beiden Halteeinheiten 67 angeordnet ist. Exemplarisch umfasst das Koppelgetriebe 67 zwei Kopplungshebel 77, die jeweils verschwenkbar einerseits an einem Anlenkpunkt 83 mit dem Abtriebsglied 75 und andererseits mit einer der Halteeinheiten 67 verbunden sind.

Das Koppelgetriebe 76 kann direkt am Abtriebsglied 75 angeordnet sein. Bevorzugt wird allerdings die exemplarische Lösung, bei der das Abtriebsglied 75 kraftübertragend an einem als Steuerelement 78 bezeichneten Zwischenelement angreift, an dem dann wiederum das Koppelgetriebe 76 und exemplarisch die beiden Kopplungshebel 77 gelagert sind.

Das Steuerelement 78 ist an der Tragstruktur 14 in der Höhenrichtung 9 verschiebbar gelagert. Dadurch kann es die durch die elektronische Steuereinrichtung 28 vorgebbare, durch einen Doppelpfeil angedeutete hin- und hergehende Abtriebsbewegung 82 des Abtriebsgliedes 75 unmittelbar als eine Steuerbewegung 79 mitmachen.

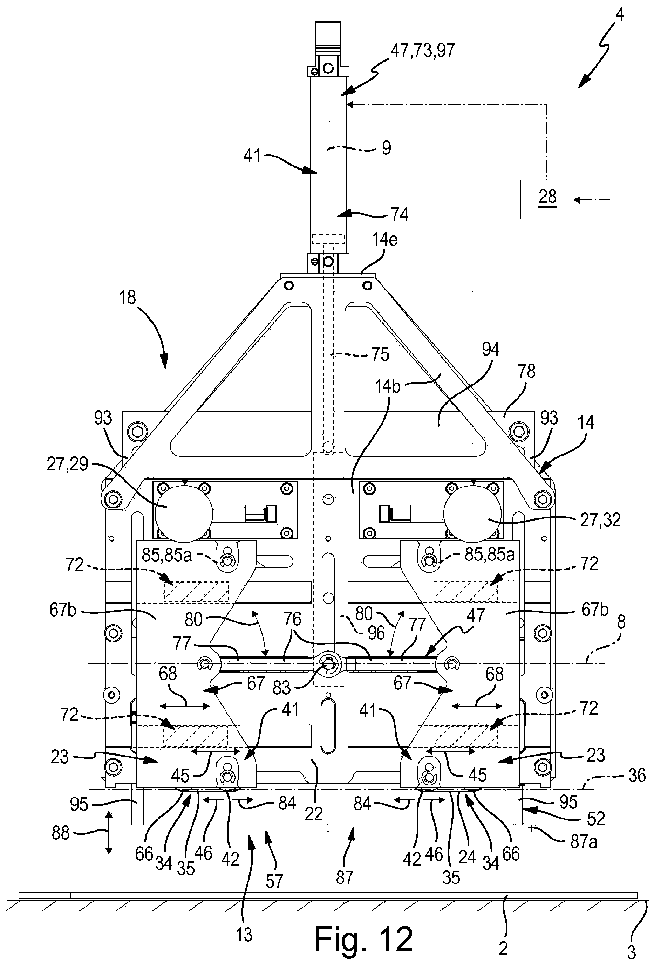

Bei der Abtriebsbewegung 82 verlagert sich der am Steuerelement 78 angeordnete Anlenkpunkt 83 der Kopplungshebel 77 nach oben oder unten, sodass die Kopplungshebel 77 jeweils einenends mitgenommen und gemäß Pfeilen 80 in Figur 12 verschwenkt werden. Dadurch werden die beiden Halteeinheiten 67 unter Ausführung der Halteeinheitbewegung 68 entweder zur gegenseitigen Annäherung zueinander gezogen oder zur gegenseitigen Entfernung voneinander wegdrückt.

Durch das Koppelgetriebe 76 sind die beiden Halteeinheiten 67 derart bewegungsmäßig miteinander synchronisiert, dass sie zum Hervorrufen der Lösebewegungen 46 der beiden Löse-Umlenkelemente 42 jeweils relativ zur Tragstruktur 14 aufeinander zu bewegbar sind.

In den aus den Figuren 6 bis 14 sowie 17 und 18 ersichtlichen Betriebsphasen sind die Halteeinheiten 67 unter Einnahme einer Grundstellung voneinander entfernt. Hier nehmen die Löse-Umlenkelemente 42 gleichzeitig ihre Lösestellung ein. Die Figuren 15 und 16 zeigen eine Betriebsphase mit unter Einnahme einer Arbeitsstellung aneinander angenäherten Halteeinheiten 67, in der die Löse-Umlenkelemente 42 ihre Greifstellung einnehmen.

Wenn sich die beiden Halteeinheiten 67 bei der Halteeinheitbewegung 68 voneinander entfernen, ist dies innerhalb jeder Greifeinheit 23 mit einer Lösebewegung 46 des Löse-Umlenkelementes 42 verbunden. Die Löse-Umlenkelemente 42 bewegen sich aus der in Figur 15 gezeigten Greifstellung in die aus Figuren 13 und 14 ersichtliche Lösestellung. Dies geht mit einer Verkürzung des Greifabschnittes 35 einher. Dabei erfolgt gleichzeitig die schon erwähnte Umlaufbewegung 48 jedes Greifabschnittes 35 um das zugeordnete Löse-Umlenkelement 42, durch die die Verkürzung des Greifabschnittes 35 kompensiert und gleichzeitig der Greifabschnitt 35 vom daran haftenden Objekt 2 abgezogen wird.

Da diese Löseaktion durch die Greifvorrichtungs-Antriebseinrichtung 73 hervorrufbar ist, definiert selbige bei dem Ausführungsbeispiel der Figuren 6 bis 18 unmittelbar auch die erfindungsgemäße Löse-Antriebseinrichtung 47. Darüber hinaus ist die Greifvorrichtung-Antriebseinrichtung 73 wie erläutert auch in der Lage, eine der Lösebewegung 46 entgegengesetzte Bewegung der Löse-Umlenkelemente 42 hervorzurufen, die zum Ergreifen eines Objektes 2 ausführbar ist und ausgeführt wird, sodass man von einer Greifbewegung 84 sprechen kann, die in der Zeichnung durch einen Pfeil angedeutet ist. Die Greifbewegung 84 findet beim Übergang zwischen der in Figuren 13 und 14 gezeigten dritten Betriebsphase und der in den Figuren 15 und 16 illustrierten vierten Betriebsphase statt.

Anders als bei dem Ausführungsbeispiel der Figuren 2 bis 5 ist bei dem Ausführungsbeispiel der Figuren 6 bis 18 die Lösebewegung 46 unabhängig vom Adhäsionsband 24 erzeugbar, nämlich durch die aktive Verlagerung des Löse-Umlenkelementes 42 aufgrund dessen antriebsmäßiger Kopplung mit der Löse-Antriebseinrichtung 47 beziehungsweise mit der Greifvorrichtungs-Antriebseinrichtung 73.

Bei einer vorteilhaften Ausgestaltung, die bei dem Ausführungsbeispiel der Figuren 6 bis 18 verwirklicht ist, verfügen mehrere Greifeinheiten 23 über ein gemeinsames Adhäsionsband 24. Exemplarisch ist daher den beiden Greifeinheiten 23 ein zwischen zwei Haltebereichen 25a, 25b verlaufendes Adhäsionsband 24 gemeinsam zugeordnet. Die beiden Greifabschnitte 35 haben somit übereinstimmende Haltebereiche 25a, 25b für das gemeinsame Adhäsionsband 24.

Ein und dasselbe Adhäsionsband 24 ist durch die Arbeitsbereiche 34 beider Greifeinheiten 23 hindurchgeführt. Somit sind die durch die beiden Arbeitsbereiche 35 hindurchgeführten Greifabschnitte 35 von in der Bandlängsrichtung zueinander beabstandeten Längenabschnitten ein und desselben Adhäsionsbandes 24 gebildet.

Diverse zusätzliche Umlenkelemente 85 für das Adhäsionsband 24, die zusätzlich zu den Löse-Umlenkelementen 42 und den weiteren Umlenkelementen 66 vorhanden sind, sind derart in der Hauptebene 12 liegend an der Tragstruktur 14 und/oder an den Halteeinheiten 67 angeordnet, dass sich ein zur Ausführung des Greifvorganges und des Lösevorganges günstiger Bandlängsverlauf einstellt. Die zusätzlichen Umlenkelemente 85 sind insbesondere so angeordnet, dass sich die Länge des zwischen den beiden Haltebereichen 25a, 25b erstreckenden Längenabschnittes des Adhäsionsbandes 24 bei der Halteeinheitbewegung 68 nicht verändert. Dadurch kann die Längenänderung der Greifabschnitte 35 in Verbindung mit der Umlaufbewegung 48 ohne eine Veränderung der Bandspannung des Adhäsionsbandes 24 erfolgen.

Bevorzugt ist an jeder Halteeinheit 67 ein als Halteinheit-Umlenkelement 85a bezeichnetes zusätzliches Umlenkelement 85 vorhanden, um das der sich zwischen den beiden Löse-Umlenkelementen 42 erstreckende Längenabschnitt des Adhäsionsbandes 24 herumgeschlungen ist. Bei diesen beiden Halteeinheit-Umlenkelementen 85a findet im gleichen Maße wie bei den Löse-Umlenkelementen 42 während der Halteeinheitbewegung 68 eine gegenseitige Annäherung beziehungsweise ein gegenseitiges Entfernen statt. Während sich bei der gegenseitigen Annäherung die Länge der beiden Greifabschnitte 35 vergrößert, verringert sich gleichzeitig die Länge des als Zwischenabschnitt 68 bezeichneten, sich zwischen den beiden Halteinheiten-Umlenkelementen 85a erstreckenden Längenabschnittes des Adhäsionsbandes 24. Bei entgegengesetzter Halteeinheitbewegung 68 vergrößert sich die Länge des Zwischenabschnittes 86 in gleichem Maße wie sich die Länge der Greifabschnitte 35 in Summe verkürzt. Durch diese Längenkompensation wird erreicht, dass das Adhäsionsband 24 die durch die Bandtransport-Antriebseinrichtung 27 vorgegebene Bandspannung konstant beibehält.

Bei dem Ausführungsbeispiel der Figuren 6 bis 18 hat das Adhäsionsband 24 zwischen den beiden Haltebereichen 25a, 25b einen im Wesentlichen W-förmigen Verlauf. An den freien Enden der beiden Außenschenkel des W befinden sich die Haltebereiche 25a, 25b. In den Übergangsbereichen der Außenschenkel zu je einem Innenschenkel des W befinden sich die beiden Arbeitsbereiche 34. Der Zwischenabschnitt 86 ist dem Übergangsbereich zwischen den beiden Innenschenkeln des W zugeordnet.

Die weiter oben schon erwähnte Objekt-Abstützeinrichtung 52 ist bei dem Ausführungsbeispiel der Figuren 6 bis 18 derart ausgebildet, dass durch sie sowohl das zu ergreifende Objekt 2 als auch das ergriffene Objekt 2 abstützbar ist. Im Unterschied zur Ausführungsform der Figuren 2 bis 5 hat diese Objekt-Abstützeinrichtung 52 mindestens ein und bevorzugt genau ein bewegliches Abstützelement 87, das eine durch einen Doppelpfeil angedeutete Hubbewegung 88 relativ zur Tragstruktur 14 ausführen kann, wobei die Bewegungsrichtung zweckmäßigerweise in der Höhenrichtung 9 verläuft und insbesondere die gleiche Ausrichtung hat wie die durch die Abtriebsbewegung 82 der Greifvorrichtungs-Antriebseinrichtung 73 hervorrufbare Steuerbewegung 79 des Steuerelementes 78.

Das bewegliche Abstützelement 87 befindet sich in der Nähe der beiden Arbeitsbereiche 34, denen es in der Höhenrichtung 9 im Bereich der Unterseite 13 vorgelagert ist. In einer Unteransicht der Adhäsions-Greifvorrichtung 4 erstreckt sich das bewegliche Abstützelement 87 neben den Arbeitsbereichen 34 und insbesondere um die Arbeitsbereiche 34 herum. Ein beiden Arbeitsbereichen 34 gemeinsam zugeordnetes beweglichen Abstützelement 87 hat zweckmäßigerweise in jedem einem Arbeitsbereich 34 in der Höhenrichtung 9 gegenüberliegenden Bereich eine fensterartige Durchbrechung 91, die den Durchgriff des zugeordneten Greifabschnittes 85, des Löse-Umlenkelementes 42 und des weiteren Umlenkelementes 66 gestattet.

Das bewegliche Abstützelement 87 definiert an seiner den Greifeinheiten 23 abgewandten Unterseite mindestens eine Abstützfläche 57 für das Objekt 2.

Im Rahmen der Hubbewegung 88 kann das bewegliche Abstützelement 87 wahlweise in einer nach unten von den Arbeitsbereichen 34 abgerückten, ausgefahrenen Stellung 87a und in einer an die Arbeitsbereiche 34 angenäherten eingefahrenen Stellung 87b verlagert werden.

Das bewegliche Abstützelement 87 kann direkt an der Tragstruktur 14 diesbezüglich beweglich angeordnet sein. Bevorzugt wird jedoch die illustrierte Ausführungsform, bei der das bewegliche Abstützelement 87 an dem Steuerelement 78 in der Höhenrichtung 9 verschiebbar gelagert ist. Das Steuerelement 78 fungiert daher als ein Bestandteil der Objekt-Abstützeinrichtung 52.

Zwischen das bewegliche Abstützelement 87 und das Steuerelement 78 ist bevorzugt eine aus einer oder mehreren Federeinheiten bestehende Federeinrichtung 92 eingegliedert, die exemplarisch als eine Druckfedereinrichtung ausgebildet ist und durch die das bewegliche Abstützelement 87 ständig in die ausgefahrene Stellung 87a vorgespannt ist.

Beispielhaft verfügt das Steuerelement 78 über zwei den in der Hauptrichtung 8 orientierten Endbereichen der Tragstruktur 14 zugeordnete, insbesondere säulenförmige oder stabförmige äußere Steuerschenkel 93, die ausgehend von einem sich in der Hauptrichtung 8 erstreckenden, der Oberseite 18 zugeordneten Verbindungsabschnitt 94 des Steuerelementes 78 in der Höhenrichtung 9 nach unten ragen. Die äußeren Steuerschenkel 93 erstrecken sich in verschiebbarer Weise insbesondere im Innern der Tragstruktur 14. Das Abtriebsglied 75 greift bevorzugt an dem Verbindungsabschnitt 94 an.

Das bewegliche Abstützelement 87 ist in jedem äußeren Steuerschenkel 93 mittels mindestens einer gleitverschieblich von unten her eingreifenden Führungssäule 95 in der Höhenrichtung 9 verschiebbar gelagert. Die Federeinrichtung 92 wirkt zweckmäßigerweise zwischen je einem äußeren Steuerschenkel 93 und der diesem äußeren Steuerschenkel 93 zugeordneten Führungssäule 95.

Der weiter oben erwähnte Anlenkpunkt 83 für das Koppelgetriebe 76 ist zweckmäßigerweise an einem inneren Steuerschenkel 96 des Steuerelementes 78 angeordnet, der sich zwischen den beiden äußeren Steuerschenkeln 93 ausgehend von dem Verbindungsabschnitt 94 nach unten in die Tragstruktur 14 hinein erstreckt.

Miteinander kooperierende Anschlagmittel an dem Steuerelement 78 und an den Führungssäulen 95 begrenzen den Ausfahrhub des beweglichen Abstützelementes 87 bezüglich der äußeren Steuerschenkel 93.

Somit sind durch die Steuerbewegung 79 nicht nur die Halteeinheitbewegungen 68, sondern auch die Hubbewegung 88 des beweglichen Abstützelementes 87 steuerbar. Solange das bewegliche Abstützelement 87 nicht extern gestoppt wird, macht es die Steuerbewegung 79 des Steuerelementes 78 synchron mit.

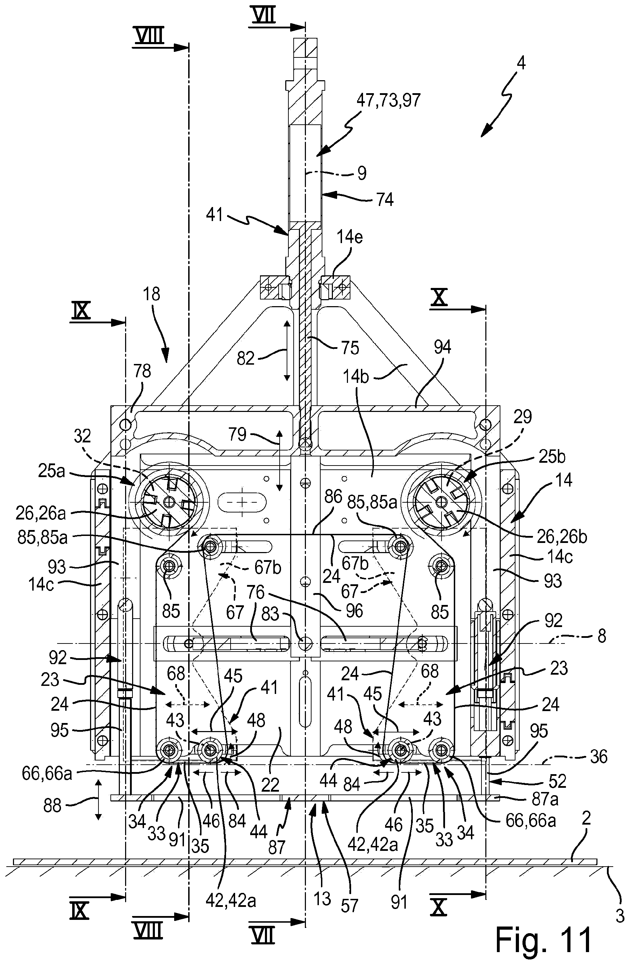

Im Rahmen der Steuerbewegung 79 kann das Steuerelement 78 wahlweise in einer relativ zur Tragstruktur 14 abgesenkten, beispielsweise aus den Figuren 11 und 12 ersichtlichen ersten Steuerstellung und in einer bezüglich der Tragstruktur 14 hochgefahrenen, aus den Figuren 15 und 16 ersichtlichen zweiten Steuerstellung positioniert werden. In der ersten Steuerstellung befindet sich das unbeaufschlagte bewegliche Abstützelement 87 in der ausgefahrenen Stellung 87a, während es in der zweiten Steuerstellung des Steuerelementes 78 die eingefahrene Stellung 87b einnimmt. Die Löse-Umlenkelemente 42 befinden sich während der ersten Steuerstellung in der Lösestellung und während der zweiten Steuerstellung in der Greifstellung.

Die vorstehenden Ausführungen zeigen, dass die Hubbewegung 88 des beweglichen Abstützelementes 87 durch die Greifvorrichtungs-Antriebseinrichtung 73 beeinflussbar und insbesondere auch hervorrufbar ist, sodass die Greifvorrichtungs-Antriebseinrichtung 73 auch als eine Hub-Antriebseinrichtung 97 für das hubbewegliche Abstützelement 87 fungiert.

Befindet sich das Steuerelement 78 in der ersten Steuerstellung, kann das bewegliche Abstützelement 87 auch ohne eine Betätigung des Steuerelementes 78 in die eingefahrene Stellung 87b verbracht werden, indem es durch eine im Einfahrsinne wirkende externe Kraft beaufschlagt wird, die insbesondere dadurch hervorrufbar ist, dass die Adhäsions-Greifvorrichtung 4 im Rahmen der Ansetzbewegung 37 gemäß Figuren 13 und 14 mit vorauseilendem beweglichem Abstützelement 78 an das zu ergreifende Objekt 2 angesetzt wird.

Exemplarisch werden die Halteeinheitbewegungen 68 und die Hubbewegungen 88 gemeinsam durch die Hub-Antriebseinrichtung 97 erzeugt. Es versteht sich jedoch, dass für die Erzeugung dieser beiden Bewegungen auch voneinander getrennte Antriebsmittel vorgesehen sein können.

Nachfolgend wird ein bevorzugter Betriebsablauf zum Umpositionieren eines Objektes 2 unter Verwendung der in den Figuren 6 bis 18 illustrierten Adhäsions-Greifvorrichtung 4 erläutert. Der Betriebsablauf wird durch die elektronische Steuereinrichtung 88 gesteuert.

In einer aus Figuren 6 bis 12 ersichtlichen ersten Betriebsphase ist das umzupositionierende Objekt 2 auf einer Bereitstellungsvorrichtung 3 abgelegt und die Adhäsions-Greifvorrichtung 4 ist mittels der Positioniervorrichtung 5 mit Abstand oberhalb des Objektes 2 platziert. Das Steuerelement 78 befindet sich in der ersten Steuerstellung, sodass die Löse-Umlenkelemente 42 die Lösestellung und das bewegliche Abstützelement 87 die ausgefahrene Stellung einnehmen.

In der darauffolgenden, aus Figuren 17 und 18 ersichtlichen zweiten Betriebsphase wird die Adhäsions-Greifvorrichtung 4 unter Ausführung der Ansetzbewegung 37 der Handhabungsbewegung 7 abgesenkt, bis das bewegliche Abstützelement 87 an dem nach wie vor durch die hier nicht weiter abgebildete Bereitstellungsvorrichtung 3 vertikal abgestützten Objekt 2 zur Anlage gelangt.

In der darauffolgenden dritten Betriebsphase wird durch die Positioniervorrichtung 5 die Ansetzbewegung 37 fortgesetzt, wobei das Steuerelement 78 nach wie vor in der ersten Steuerstellung gehalten ist. Als Folge hiervon wird das bewegliche Abstützelement 87 unter Ausführung einer einfahrenden Hubbewegung 88 in die eingefahrene Position verlagert. Dadurch gelangen gleichzeitig die beiden Greifabschnitte 35 mit der daran befindlichen Adhäsionsfläche 33 an dem Objekt 2 zur Anlage. Die Greifabschnitte 35 können dabei durch die fensterartigen Durchbrechungen 91 hindurchtreten.

Beginnend mit dieser dritten Betriebsphase wird das Steuerelement 78 durch die Steuerbewegung 79 aus der ersten Steuerstellung in die aus Figuren 15 und 15 ersichtliche zweite Steuerstellung verlagert. Daraus resultiert der aus Figuren 15 und 16 ersichtliche vierte Betriebszustand. Beim Übergang zwischen dem dritten Betriebszustand zum vierten Betriebszustand haben die Löse-Umlenkelemente 42 die Greifbewegung 84 ausgeführt, sodass sich die Länge der adhäsiv an dem Objekt 2 anliegenden Greifabschnitte 35 vergrößert hat. Die Kontaktfläche ist nun auf jeden Fall ausreichend groß, um das Objekt 2 anheben und festhalten zu können.

In der vierten Betriebsphase hat sich das Steuerelement 78 relativ zu dem beweglichen Abstützelement 78 nach oben verlagert, sodass sich die Federeinrichtung 92 entspannt hat und das in der eingefahrenen Stellung 87b befindliche bewegliche Abstützelement 87 in dieser eingefahrenen Stellung 87b auch ohne eine von extern einwirkende Abstützkraft verbleibt.

Nun kann in nicht weiter illustrierter Weise das festgehaltene Objekt 2 durch Ausführung beliebiger Handhabungsbewegungen 7 der Adhäsions-Greifvorrichtung 4 im Raum verlagert werden.

Anschließend wird an dem gewünschten Zielpunkt der Handhabungsbewegung 7 das bis dahin festgehaltene Objekt 2 von den Greifabschnitten 35 abgelöst und auf einer Unterlage abgelegt.

Der anfängliche Vorgang dieses Ablegens entspricht wiederum der Illustration in den Figuren 15 und 16, nur mit dem Unterschied, dass hier das Objekt 2 noch an den Greifabschnitten 35 haftet, während es beim vorausgegangenen Greifvorgang durch die illustrierte Maßnahme von den Greifabschnitten 35 ergriffen wird.

In der sich anschließenden fünften Betriebsphase, die in Figuren 13 und 14 illustriert ist, wird die oben bereits im Detail geschilderte Löseaktion ausgeführt. Dabei wird das Adhäsionsband 24 vom Objekt 2 abgezogen, sodass die verbleibende, weiterhin haftend wirkende Kontaktfläche klein genug ist, um das Objekt 2 in einer sich anschließenden, aus Figuren 17 und 18 ersichtlichen sechsten Betriebsphase gänzlich vom Adhäsionsband 24 zu lösen.

Dieser abschließende Lösevorgang ergibt sich exemplarisch automatisch dadurch, dass die Adhäsions-Greifvorrichtung 4 vom Objekt 2 abgehoben wird. Während der Löseaktion gemäß Figuren 13 und 14 wurde das Steuerelement 78 in die erste Schaltstellung verbracht, was zur Folge hatte, dass die Federeinrichtung 92 gespannt wurde, weil das bewegliche Abstützelement 87 durch das auf der Unterlage aufliegende Objekt 2 abgestützt ist. Wird nun gemäß Figuren 17 und 18 die Adhäsions-Greifvorrichtung 4 abgehoben, hebt anfänglich nur die Tragstruktur 14 zusammen mit den Greifeinheiten 23 vom Objekt 2 ab, während das bewegliche Abstützelement 87 in Anlage am Objekt 2 verharrt, weil die gespannte Federeinrichtung 92 wirksam ist. Beim Abheben der Tragstruktur 14 vom Objekt 2 findet daher eine durch die Federeinrichtung 92 hervorgerufene Hubbewegung 88 des beweglichen Abstützelementes 87 relativ zur Tragstruktur 14 in die ausgefahrene Stellung 87a statt, durch die das Objekt 2 zurückgehalten wird. Folglich werden die Greifabschnitte 35 durch die Federkraft der Federeinrichtung 92 vom Objekt 2 weggedrückt und abgelöst.

## Patentansprüche

1. Handhabungsvorrichtung zum Umpositionieren von Objekten (2), mit einer Adhäsions-Greifvorrichtung (4), die eine Tragstruktur (14) aufweist, an der eine Befestigungsschnittstelle (6) zur Befestigung der Adhäsions-Greifvorrichtung (4) an einer Positioniervorrichtung (5) ausgebildet ist, durch die die Adhäsions-Greifvorrichtung (4) unter Ausführung einer Handhabungsbewegung (7) bewegbar und positionierbar ist, mit mindestens einer an der Tragstruktur (14) angeordneten Greifeinheit (23), die über ein sich in einer Hauptebene (12) der Adhäsions-Greifvorrichtung (4) zwischen zwei zueinander beabstandeten Haltebereichen (25a, 25b) erstreckendes, zumindest einseitig eine Adhäsionsfläche (33) aufweisendes biegeflexibles Adhäsionsband (24) verfügt, das einen durch einen Arbeitsbereich (34) der Greifeinheit (23) hindurchgeführten Längenabschnitt hat, der einen Greifabschnitt (35) bildet, durch den in dem Arbeitsbereich (34) ein umzupositionierendes Objekt (2) durch die Adhäsionswirkung der Adhäsionsfläche (33) ergreifbar und lösbar festhaltbar ist, wobei die Adhäsions-Greifvorrichtung (4) eine zum Lösen eines durch den Greifabschnitt (35) des Adhäsionsbandes (24) ergriffenen Objektes (2) ausgebildete Löseeinrichtung (41) umfasst, die mindestens ein im Arbeitsbereich (34) der Greifeinheit (35) angeordnetes, von dem Adhäsionsband (24) partiell umschlungenes und in der Hauptebene (12) relativ zu der Tragstruktur (14) zur Ausführung einer Lösebewegung (46) translatorisch bewegbares Löse-Umlenkelement (42) aufweist und die außerdem eine an der Tragstruktur (14) angeordnete Löse-Antriebseinrichtung (47) aufweist, **dadurch gekennzeichnet, dass** durch die Löse-Antriebseinrichtung eine mit der Lösebewegung (46) des Löse-Umlenkelementes (42) einhergehende, ein aktives Abziehen des Adhäsionsbandes (24) vom ergriffenen Objekt (2) bewirkende Umlaufbewegung (48) des Greifabschnittes (35) um das Löse-Umlenkelement (42) hervorrufbar ist.

2. Handhabungsvorrichtung nach Anspruch 1, **dadurch gekennzeichnet, dass** das Adhäsionsband (24) ein Selbstklebeband ist, dessen Adhäsionsfläche (33) von einer Selbstklebefläche gebildet ist.

3. Handhabungsvorrichtung nach Anspruch 1 oder 2, **dadurch gekennzeichnet, dass** das Adhäsionsband (24) in den beiden Haltebereichen (25a, 25b) um jeweils eine Wickelrolle (26) herumgewickelt ist, die bezüglich der Tragstruktur (14) um eine zu der Hauptebene (12) rechtwinkelige Drehachse drehbar ist, wobei es sich bei der einen Wickelrolle (16) um eine das unverbrauchte Adhäsionsband (24) zur Verfügung stellende Abwickelrolle (26a) und bei der anderen Wickelrolle (26) um eine das verbrauchte Adhäsionsband (24) aufnehmende Aufwickelrolle (26b) handelt, wobei zweckmäßigerweise jede Greifeinheit (23) eine Bandtransport-Antriebseinrichtung (27) aufweist, durch die das Adhäsionsband (24) zu einer sein diskontinuierliches Umspulen von der Abwickelrolle (26a) auf die Aufwickelrolle (26b) bewirkenden Transportbewegung antreibbar ist.

4. Handhabungsvorrichtung nach einem der Ansprüche 1 bis 3, **dadurch gekennzeichnet, dass** das Löse-Umlenkelement (42) eine von dem Adhäsionsband (24) umschlungene, bogenförmig gekrümmte Umlenkfläche (44) aufweist, deren von dem Adhäsionsband (24) umschlungene Bogenlänge zweckmäßigerweise kleiner als 180 Grad ist, und/oder dass das Löse-Umlenkelement (42) als eine bezüglich der Tragstruktur (14) um eine zu der Hauptebene (12) rechtwinkelige Drehachse (43) drehbare Umlenkrolle (42a) ausgebildet ist, die zweckmäßigerweise frei drehbar gelagert ist.

5. Handhabungsvorrichtung nach einem der Ansprüche 1 bis 4, **dadurch gekennzeichnet, dass** die Adhäsions-Greifvorrichtung (4) über mehrere an der Tragstruktur (14) angeordnete Greifeinheiten (23) verfügt, die jeweils einen eigenen Arbeitsbereich (34) aufweisen, durch den ein Greifabschnitt (35) eines Adhäsionsbandes (24) hindurchgeführt ist und dem ein eigenes Löse-Umlenkelement (42) zugeordnet ist, wobei zweckmäßigerweise mindestens eine der mehreren Greifeinheiten (23) relativ zu der Tragstruktur (14) und zu mindestens einer weiteren Greifeinheit (23) verstellbar und positionierbar ist, derart, dass unterschiedliche Relativpositionen der Arbeitsbereiche (34) mehrerer Greifeinheiten (23) einstellbar sind.

6. Handhabungsvorrichtung nach Anspruch 5, **dadurch gekennzeichnet, dass** die Arbeitsbereiche (34) mehrerer Greifeinheiten (23) in einer zu der Hauptebene (12) der Adhäsions-Greifvorrichtung (4) parallelen Hauptrichtung (8) beabstandet zueinander angeordnet sind, wobei sie zweckmäßigerweise in einer zu der Hauptebene (12) der Adhäsions-Greifvorrichtung (4) ebenfalls parallelen und zu der Hauptrichtung (8) rechtwinkeligen Höhenrichtung (9) der Adhäsions-Greifvorrichtung (4) auf gleicher Höhe liegen.

7. Handhabungsvorrichtung nach Anspruch 5 oder 6, **dadurch gekennzeichnet, dass** die mehreren Greifeinheiten (23) unabhängig voneinander ausgebildet sind und jeweils über ein eigenes Adhäsionsband (24) verfügen, wobei jedes Adhäsionsband (24) zwischen zwei nur ihm allein zugeordneten Haltebereichen (25a, 25b) der Tragstruktur (14) verläuft, oder dass mehreren Greifeinheiten (23) der Adhäsions-Greifvorrichtung (4) ein zwischen zwei Haltebereichen (25a, 25b) der Tragstruktur (14) verlaufendes Adhäsionsband (24) gemeinsam zugeordnet ist, das durch die Arbeitsbereiche (34) dieser mehreren Greifeinheiten (23) hindurchgeführt ist, wobei die durch diese Arbeitsbereiche (34) hindurchgeführten Greifabschnitte (35) von zueinander beabstandeten Längenabschnitten ein und desselben Adhäsionsbandes (24) gebildet sind.

8. Handhabungsvorrichtung nach einem der Ansprüche 1 bis 7, **dadurch gekennzeichnet, dass** im Arbeitsbereich (34) mindestens einer Greifeinheit (23) als einziges Umlenkelement für das Adhäsionsband (24) nur das Löse-Umlenkelement (42) vorhanden ist, wobei sich der Greifabschnitt (35) des Adhäsionsbandes (24) mit gekrümmtem Längsverlauf um das Löse-Umlenkelement (42) herum erstreckt.

9. Handhabungsvorrichtung nach einem der Ansprüche 1 bis 8, **dadurch gekennzeichnet, dass** mindestens eine Greifeinheit (23) in ihrem Arbeitsbereich (34) zusätzlich zu dem Löse-Umlenkelement (42) ein diesbezüglich in der Hauptebene (12) der Adhäsions-Greifvorrichtung (4) beabstandetes weiteres Umlenkelement (66) für das Adhäsionsband (24) aufweist, das von dem Adhäsionsband (24) partiell umschlungen ist, wobei sich der Greifabschnitt (35) des Adhäsionsbandes (24) zwischen dem Löse-Umlenkelement (42) und dem weiteren Umlenkelement (66) erstreckt und wobei sich bei der Lösebewegung (46) der Abstand zwischen dem Löse-Umlenkelement (42) und dem weiteren Umlenkelement (66) verringert, wobei zweckmäßigerweise das weitere Umlenkelement (66) ein bezüglich der Tragstruktur (14) ortfestes, stationäres Umlenkelement (66) ist und/oder das weitere Umlenkelement (66) als eine bezüglich der Tragstruktur (14) um eine zu der Hauptebene (12) rechtwinkelige Drehachse drehbare Umlenkrolle (42a) ausgebildet ist, die zweckmäßigerweise frei drehbar gelagert ist.

10. Handhabungsvorrichtung nach einem der Ansprüche 1 bis 9, **dadurch gekennzeichnet, dass** das Löse-Umlenkelement (42) durch eine Federeinrichtung (55) mit einer Federkraft in eine Greifstellung vorgespannt ist, wobei es durch die von der Löse-Antriebseinrichtung (47) hervorrufbare Lösebewegung (46) relativ zu der Tragstruktur (14) entgegen der Federkraft in mindestens eine von der Greifstellung abweichende Lösestellung bewegbar ist.

11. Handhabungsvorrichtung nach einem der Ansprüche 1 bis 10, **dadurch gekennzeichnet, dass** die Löse-Antriebseinrichtung (47) derart ausgebildet ist, dass durch sie eine die Lösebewegung (46) des Löse-Umlenkelementes (42) hervorrufende Zugkraft in das in mindestens einem der Haltebereiche (25a, 25b) festgehaltene Adhäsionsband (24) einleitbar ist, wobei die Löse-Antriebseinrichtung (47) zweckmäßigerweise mindestens einen in einem der Haltebereiche (25a, 25b) zur Erzeugung der Zugkraft (54) mit dem Adhäsionsband (24) zusammenwirkenden Antriebsmotor (29) aufweist, wobei die Löse-Antriebseinrichtung (47) zweckmäßigerweise in einem der Haltebereiche (25a) eine zum lösbaren Festhalten des Adhäsionsbandes (24) ausgebildete Bremse (32) aufweist.

12. Handhabungsvorrichtung nach einem der Ansprüche 1 bis 11, **dadurch gekennzeichnet, dass** die Löse-Antriebseinrichtung (42) zum Hervorrufen der Lösebewegung (46) des Löse-Umlenkelementes (42) unabhängig von dem Adhäsionsband (24) antriebsmäßig mit dem Löse-Umlenkelement (42) gekoppelt ist.

13. Handhabungsvorrichtung nach Anspruch 12, **dadurch gekennzeichnet, dass** das Löse-Umlenkelement (42) an einer bezüglich der Tragstruktur (14) gesonderten Halteeinheit (67) ortsfest angeordnet ist, die zum Hervorrufen der Lösebewegung (46) des Löse-Umlenkelements (42) an der Tragstruktur (14) diesbezüglich bewegbar gelagert ist, wobei die Löse-Antriebseinrichtung (47) an der Tragstruktur (14) angeordnet und mit der Halteeinheit (67) antriebsmäßig gekoppelt ist.

14. Handhabungsvorrichtung nach Anspruch 13, **dadurch gekennzeichnet, dass** die Halteeinheit (67) an der Tragstruktur (14) linear verschiebbar gelagert ist.

15. Handhabungsvorrichtung nach Anspruch 14 in Verbindung mit einem der Ansprüche 5 bis 7, **dadurch gekennzeichnet, dass** die Adhäsions-Greifvorrichtung (4) über zwei Greifeinheiten (23) verfügt, die jeweils eine mit einem Löse-Umlenkelement (42) bestückte Halteeinheit (67) aufweisen, wobei die beiden Halteeinheiten (67) derart bewegungsmäßig miteinander synchronisiert sind, dass sie zum Hervorrufen der Lösebewegungen (46) der beiden Löse-Umlenkelemente (42) jeweils relativ zur Tragstruktur (14) aufeinander zu bewegbar sind.

16. Handhabungsvorrichtung nach einem der Ansprüche 1 bis 15, **dadurch gekennzeichnet, dass** die Adhäsions-Greifvorrichtung (4) über eine Objekt-Abstützeinrichtung (52) verfügt, die mindestens ein dem Arbeitsbereich (34) zugeordnetes, zum Abstützen des zu ergreifenden oder ergriffenen Objektes (2) ausgebildetes Abstützelement (56, 87) aufweist, wobei zweckmäßigerweise das mindestens eine Abstützelement (87) unter Ausführung einer Hubbewegung (88) relativ zu der Tragstruktur (14) an den Arbeitsbereich (34) heranfahrbar oder von dem Arbeitsbereich (34) abrückbar ist, wobei ihm zweckmäßigerweise eine zur Beeinflussung der Hubbewegung (88) ausgebildete Hub-Antriebseinrichtung (97) zugeordnet ist und/oder wobei es zweckmäßigerweise durch eine Federeinrichtung (92) in eine vom Arbeitsbereich (34) abgerückte ausgefahrene Stellung vorgespannt ist.

17. Handhabungsvorrichtung nach einem der Ansprüche 1 bis 16, **dadurch gekennzeichnet, dass** sie die Positioniervorrichtung (5) aufweist, wobei die Adhäsions-Greifvorrichtung (4) über ihre Befestigungsschnittstelle (6) an der Positioniervorrichtung (5) befestigt ist.

## Claims

1. Handling device for repositioning objects (2), with an adhesion gripping device (4) having a support structure (14), at which a fastening interface (6) is formed for fastening the adhesion gripping device (4) at a positioning device (5), by means of which fastening interface (6) the adhesion gripping device (4) can be moved and positioned while performing a handling movement (7), with at least one gripping unit (23), which is located at the support structure (14) and has a bendable adhesion tape (24), which extends in a main plane (12) of the adhesion gripping device (4) between two adjacent holding regions (25a, 25b) and has at least one adhesion surface (33), and which has a longitudinal section routed through a working region (34) of the gripping unit (23) and forming a gripping section (35), by means of which an object (2) to be repositioned can be gripped and releasably held in the working region (34) by the adhesion effect of the adhesion surface (33), wherein the adhesion gripping device (4) comprises a releasing device (41) designed for releasing an object (2) gripped by the gripping section (35) of the adhesion tape (24), which releasing device (41) has at least one releasing deflection element (42) located in the working region (34) of the gripping unit (23), partially wrapped by the adhesion tape (24) and capable of translational movement in the main plane (12) relative to the support structure (14) while performing a releasing movement (46), and which furthermore has a releasing drive device (47) located at the support structure (14), **characterised in that** by means of the releasing drive device an orbital movement (48) of the gripping section (35) about the releasing deflection element (42) can be caused, which orbital movement (48) accompanies the releasing movement (46) of the releasing deflection element (42) and causes an active withdrawal of the adhesion tape (24) from the gripped object (2).

2. Handling device according to claim 1, **characterised in that** the adhesion tape (24) is a self-adhesive tape the adhesion surface (33) of which is represented by a self-adhesive surface.

3. Handling device according to claim 1 or 2, **characterised in that** the adhesion tape (24) is in the two holding regions (25a, 25b) wound around a winding roll (26) each, which is rotatable with respect to the support structure (14) about an axis of rotation perpendicular to the main plane (12), wherein the one winding roll (26) is an unwinding roll (26a) making available the unused adhesion tape (24) and the other winding roll (26) is a wind-up roll (26b) receiving the used adhesion tape (24), wherein each gripping unit (23) expediently has a tape conveying drive device (27), by means of which the adhesion tape (24) can be driven to perform a conveying movement causing a discontinuous rewinding from the unwinding roll (26a) to the wind-up roll (26b).

4. Handling device according to any of claims 1 to 3, **characterised in that** the releasing deflection element (42) has an arcuate curved deflection surface (44), which is surrounded by the adhesion tape (24) and whose arc length surrounded by the adhesion tape (24) is expediently less than 180 degrees, and/or **in that** the releasing deflection element (42) is designed as a deflection roller (42a), which is rotatable about an axis of rotation (43) perpendicular to the main plane (12) and is expediently bearing-mounted for free rotation.

5. Handling device according to any of claims 1 to 4, **characterised in that** the adhesion gripping device (4) has several gripping units (23) located at the support structure (14), each of which has its own working region (34), through which a gripping section (35) of an adhesion tape (24) is routed and which is assigned its own releasing deflection element (42), wherein expediently at least one of the several gripping units (23) can be adjusted and positioned relative to the support structure (14) and to at least one further gripping unit (23) in such a way that different relative positions of the working regions (34) of several gripping units (23) can be set.

6. Handling device according to claim 5, **characterised in that** the working regions (34) of several gripping units (23) are arranged at a distance from one another in a main direction (8) parallel to the main plane (12) of the adhesion gripping device (4), expediently lying at the same level in a vertical direction (9) of the adhesion gripping device (4) which is likewise parallel to the main plane (12) of the adhesion gripping device (4) and perpendicular to the main direction (8).

7. Handling device according to claim 5 or 6, **characterised in that** the several gripping units (23) are designed independently of one another, each having its own adhesion tape (24), wherein each adhesion tape (24) extends between two holding regions (25a, 25b) of the support structure (14) which are solely assigned to it, or **in that** several gripping units (23) of the adhesion gripping device (4) are jointly assigned an adhesion tape (24) extending between two holding regions (25a, 25b) of the support structure (14) and routed through the working regions (34) of said several gripping units (23), wherein the gripping sections (35) routed through said working regions (34) are represented by mutually spaced longitudinal sections of one and the same adhesion tape (24).

8. Handling device according to any of claims 1 to 7, **characterised in that** in the working region (34) of at least one gripping unit (23) there is provided only the releasing deflection element (42) as a single deflection element for the adhesion tape (24), the gripping section (35) of the adhesion tape (24) extending around the releasing deflection element (42) with a curved longitudinal path.

9. Handling device according to any of claims 1 to 8, **characterised in that** at least one gripping unit (23) has in its working region (34), in addition to the releasing deflection element (42), a further deflection element (66) for the adhesion tape (24), which further deflection element (66) is located at a distance from the former in the main plane (12) of the adhesion gripping device (4) and is partially wrapped by the adhesion tape (24), wherein the gripping section (35) of the adhesion tape (24) extends between the releasing deflection element (42) and the further deflection element (66) and wherein the distance between the releasing deflection element (42) and the further deflection element (66) decreases during the releasing movement (46), wherein the further deflection element (66) expediently is a deflection element (66) which is fixed and stationary with respect to the support structure (14) and/or the further deflection element (66) is designed as a deflection roller (42a), which is rotatable about an axis of rotation perpendicular to the main plane (12) and expediently bearing-mounted for free rotation.

10. Handling device according to any of claims 1 to 9, **characterised in that** the releasing deflection element (42) is preloaded by a spring device (55) with a spring force towards a gripping position, wherein it can be moved into at least one release position deviating from the gripping position against the spring force relative to the support structure (14) by the releasing movement (46) which can be caused by the releasing drive device (47).

11. Handling device according to any of claims 1 to 10, **characterised in that** the releasing drive device (47) is designed such that it can introduce a tensile force causing the releasing movement (46) of the releasing deflection element (42) into the adhesion tape (24) held in at least one of the holding regions (25a, 25b), wherein the releasing drive device (47) expediently has at least one drive motor (29) interacting with the adhesion tape (24) in one of the holding regions (25a, 25b) to generate the tensile force (54), wherein the releasing drive device (47) expediently has a brake (32) formed in one of the holding regions (25a) for releasably holding the adhesion tape (24).

12. Handling device according to any of claims 1 to 11, **characterised in that** the releasing drive device (47) is drive-coupled to the releasing deflection element (42) to cause the releasing movement (46) of the releasing deflection element (42).

13. Handling device according to claim 12, **characterised in that** the releasing deflection element (42) is arranged in a stationary manner at a holding unit (67) separate from the support structure (14), which holding unit (67) is mounted at the support structure (14) and movable with respect thereto to cause the releasing movement (46) of the releasing deflection element (42), wherein the releasing drive device (47) is located at the support structure (14) and drive-coupled to the holding unit (67).

14. Handling device according to claim 13, **characterised in that** the holding unit (67) is mounted at the support structure (14) for linear displacement.

15. Handling device according to claim 14 in connection with any of claims 5 to 7, **characterised in that** the adhesion gripping device (4) is provided with two gripping units (23), each of which has a holding unit (67) fitted with a releasing deflection element (42), wherein the movement of the two holding units (67) is synchronised in such a way that they can be moved towards each other relative to the support structure (14) to cause the releasing movements (46) of the two releasing deflection elements (42).

16. Handling device according to any of claims 1 to 15, **characterised in that** the adhesion gripping device (4) is provided with an object support device (52), which has at least one support element (56, 87) assigned to the working region (34) for supporting the object (2) which has to be or is gripped, wherein the at least one support element (87) can expediently be moved towards the working region (34) or away from the working region (34) relative to the support structure (14) while performing a lifting movement (88), wherein it is expediently assigned a lifting drive device (97) designed to influence the lifting movement (88) and/or wherein it is expediently preloaded towards an extended position moving away from the working region (34) by a spring device (92).

17. Handling device according to any of claims 1 to 16, **characterised in that** it has the positioning device (5), the adhesion gripping device (4) being fastened to the positioning device (5) by way of its fastening interface (6).

## Revendications

1. Dispositif de manipulation pour le repositionnement d'objets (2), avec un dispositif de préhension par adhésion (4) qui présente une structure porteuse (14), sur laquelle une interface de fixation (6) est réalisée pour la fixation du dispositif de préhension par adhésion (4) sur un dispositif de positionnement (5), par lequel le dispositif de préhension par adhésion (4) est mobile et positionnable en réalisant un mouvement de manipulation (7), avec au moins une unité de préhension (23) agencée sur la structure porteuse (14) qui dispose d'une bande d'adhésion (24) souple en flexion présentant au moins d'un côté une surface d'adhésion (33), s'étendant dans un plan principal (12) du dispositif de préhension par adhésion (4) entre deux zones de retenue (25a, 25b) espacées l'une de l'autre, qui présente une section longitudinale guidée par une zone de travail (34) de l'unité de préhension (23) qui forme une section de préhension (35), par laquelle dans la zone de travail (34), un objet (2) à repositionner peut être saisi et retenu de manière amovible par l'action d'adhésion de la surface d'adhésion (33), dans lequel le dispositif de préhension par adhésion (4) comporte un dispositif de décollement (41) réalisé pour le décollement d'un objet (2) saisi par la section de préhension (35) de la bande d'adhésion (24) qui présente au moins un élément de renvoi et de décollement (42) agencé dans la zone de travail (34) de l'unité de préhension (35), enroulé partiellement de la bande d'adhésion (24) et mobile par translation dans le plan principal (12) par rapport à la structure porteuse (14) pour la réalisation d'un mouvement de décollement (46) et qui présente en outre un dispositif d'entraînement de décollement (47) agencé sur la structure porteuse (14), **caractérisé en ce que** par le dispositif d'entraînement de décollement, un mouvement rotatif (48) accompagnant le mouvement de décollement (46) de l'élément de renvoi et de décollement (42), provoquant un retrait actif de la bande d'adhésion (24) de l'objet saisi (2) de la section de préhension (35), peut être suscité autour de l'élément de renvoi et de décollement (42).

2. Dispositif de manipulation selon la revendication 1, **caractérisé en ce que** la bande d'adhésion (24) est une bande autocollante, dont la surface d'adhésion (33) est formée par une surface autocollante.

3. Dispositif de manipulation selon la revendication 1 ou 2, **caractérisé en ce que** la bande d'adhésion (24) est enroulée dans les deux zones de retenue (25a, 25b) autour de respectivement un rouleau d'enroulement (26) qui est rotatif par rapport à la structure porteuse (14) autour d'un axe de rotation à angles droits par rapport au plan principal (12), dans lequel il s'agit pour l'un rouleau d'enroulement (16) d'un rouleau de déroulement (26a) mettant à disposition la bande d'adhésion (24) non utilisée et pour l'autre rouleau d'enroulement (26) autour d'un rouleau d'enroulement (26b) recevant la bande d'adhésion (24) utilisée, dans lequel de manière appropriée, chaque unité de préhension (23) présente un dispositif d'entraînement de transport de bande (27), par lequel la bande d'adhésion (24) peut être entraînée en un mouvement de transport provoquant son enroulement discontinu du rouleau de déroulement (26a) au rouleau d'enroulement (26b).

4. Dispositif de manipulation selon l'une quelconque des revendications 1 à 3, **caractérisé en ce que** l'élément de renvoi et de décollement (42) présente une surface de renvoi (44) courbée en arc, enroulée par la bande d'adhésion (24), dont la longueur d'arc enroulée de la bande d'adhésion (24) est de manière appropriée inférieure à 180 degrés, et/ou que l'élément de renvoi et de décollement (42) est réalisé en tant que rouleau de renvoi (42a) rotatif par rapport à la structure porteuse (14) autour d'un axe de rotation (43) à angles droits par rapport au plan principal (12) qui est logé librement rotatif de manière appropriée.

5. Dispositif de manipulation selon l'une quelconque des revendications 1 à 4, **caractérisé en ce que** le dispositif de préhension par adhésion (4) dispose de plusieurs unités de préhension (23) agencées sur la structure porteuse (14) qui présentent respectivement une zone de travail (34) propre, par laquelle une section de préhension (35) d'une bande d'adhésion (24) est guidée et à laquelle un propre élément de renvoi et de décollement (42) est associé, dans lequel de manière appropriée au moins une des plusieurs unités de préhension (23) peut être réglée et positionnée par rapport à la structure porteuse (14) et à au moins une autre unité de préhension (23) de telle manière que différentes positions relatives des zones de travail (34) de plusieurs unités de préhension (23) puissent être réglées.

6. Dispositif de manipulation selon la revendication 5, **caractérisé en ce que** les zones de travail (34) de plusieurs unités de préhension (23) sont agencées à distance les unes des autres dans un sens principal (8) parallèle au plan principal (12) du dispositif de préhension par adhésion (4), dans lequel elles se trouvent à la même hauteur de manière appropriée dans un sens vertical (9) aussi parallèle au plan principal (12) du dispositif de préhension par adhésion (4) et à angles droits par rapport au sens principal (8) du dispositif de préhension par adhésion (4).

7. Dispositif de manipulation selon la revendication 5 ou 6, **caractérisé en ce que** les plusieurs unités de préhension (23) sont réalisées indépendamment les unes des autres et disposent respectivement d'une propre bande d'adhésion (24), dans lequel chaque bande d'adhésion (24) s'étend entre deux zones de retenue (25a, 25b) associées seulement à elle seule de la structure porteuse (14), ou qu'à plusieurs unités de préhension (23) du dispositif de préhension par adhésion (4) est associée ensemble une bande d'adhésion (24) s'étendant entre deux zones de retenue (25a, 25b) de la structure porteuse (14), qui est guidée par les zones de travail (34) de ces plusieurs unités de préhension (23), dans lequel les sections de préhension (35) guidées par ces zones de travail (34) sont formées par des sections longitudinales espacées les unes des autres d'une même bande d'adhésion (24).

8. Dispositif de manipulation selon l'une quelconque des revendications 1 à 7, **caractérisé en ce que** dans la zone de travail (34) au moins d'une unité de préhension (23) en tant qu'unique élément de renvoi pour la bande d'adhésion (24), seul l'élément de renvoi et de décollement (42) est présent, dans lequel la section de préhension (35) de la bande d'adhésion (24) s'étend avec une étendue longitudinale courbée autour de l'élément de renvoi et de décollement (42).

9. Dispositif de manipulation selon l'une quelconque des revendications 1 à 8, **caractérisé en ce qu'**au moins une unité de préhension (23) dans sa zone de travail (34), outre l'élément de renvoi et de décollement (42), présente un autre élément de renvoi (66) espacé par rapport à celui-ci dans le plan principal (12) du dispositif de préhension par adhésion (4) pour la bande d'adhésion (24), qui est partiellement enroulée par la bande d'adhésion (24), dans lequel la section de préhension (35) de la bande d'adhésion (24) s'étend entre l'élément de renvoi et de décollement (42) et l'autre élément de renvoi (66) et dans lequel lors du mouvement de décollement (46), la distance entre l'élément de renvoi et de décollement (42) et l'autre élément de renvoi (66) diminue, dans lequel de manière appropriée l'autre élément de renvoi (66) est un élément de renvoi (66) stationnaire, fixe par rapport à la structure porteuse (14) et/ou l'autre élément de renvoi (66) est réalisé en tant que rouleau de renvoi (42a) rotatif par rapport à la structure porteuse (14) autour d'un axe de rotation à angles droits par rapport au plan principal (12), qui est logé librement rotatif de manière appropriée.

10. Dispositif de manipulation selon l'une quelconque des revendications 1 à 9, **caractérisé en ce que** l'élément de renvoi et de décollement (42) est précontraint par un dispositif de ressort (55) avec une force de ressort dans une position de préhension, dans lequel il est mobile par le mouvement de décollement (46) suscité par le dispositif d'entraînement de décollement (47) par rapport à la structure porteuse (14) dans le sens inverse à la force de ressort dans au moins une position de décollement divergeant de la position de préhension.

11. Dispositif de manipulation selon l'une quelconque des revendications 1 à 10, **caractérisé en ce que** le dispositif d'entraînement de décollement (47) est réalisé de telle manière que par celui-ci, une force de traction suscitant le mouvement de décollement (46) de l'élément de renvoi et de décollement (42) puisse être initiée dans la bande d'adhésion (24) retenue dans au moins une des zones de retenue (25a, 25b), dans lequel le dispositif d'entraînement de décollement (47) présente de manière appropriée au moins un moteur d'entraînement (29) coagissant dans une des zones de retenue (25a, 25b) pour la génération de la force de traction (54) avec la bande d'adhésion (24), dans lequel le dispositif d'entraînement de décollement (47) présente de manière appropriée dans une des zones de retenue (25a) un frein (32) réalisé pour la retenue amovible de la bande d'adhésion (24).

12. Dispositif de manipulation selon l'une quelconque des revendications 1 à 11, **caractérisé en ce que** le dispositif d'entraînement de décollement (42) est couplé pour susciter le mouvement de décollement (46) de l'élément de renvoi et de décollement (42) indépendamment de la bande d'adhésion (24) en entraînement à l'élément de renvoi et de décollement (42).

13. Dispositif de manipulation selon la revendication 12, **caractérisé en ce que** l'élément de renvoi et de décollement (42) est agencé fixement sur une unité de retenue (67) séparée par rapport à la structure porteuse (14) qui est logée de manière mobile par rapport à celui-ci pour susciter le mouvement de décollement (46) de l'élément de renvoi et de décollement (42) sur la structure porteuse (14), dans lequel le dispositif d'entraînement de décollement (47) est agencé sur la structure porteuse (14) et est couplé en entraînement à l'unité de retenue (67).

14. Dispositif de manipulation selon la revendication 13, **caractérisé en ce que** l'unité de retenue (67) est logée de manière coulissante linéairement sur la structure porteuse (14).

15. Dispositif de manipulation selon la revendication 14 en liaison avec l'une quelconque des revendications 5 à 7, **caractérisé en ce que** le dispositif de préhension par adhésion (4) dispose de deux unités de préhension (23) qui présentent respectivement une unité de retenue (67) équipée d'un élément de renvoi et de décollement (42), dans lequel les deux unités de retenue (67) sont synchronisées entre elles en mouvement de telle manière qu'elles soient mobiles pour susciter les mouvements de décollement (46) des deux éléments de renvoi et de décollement (42) respectivement par rapport à la structure porteuse (14) l'un vers l'autre.

16. Dispositif de manipulation selon l'une quelconque des revendications 1 à 15, **caractérisé en ce que** le dispositif de préhension par adhésion (4) dispose d'un dispositif d'appui d'objet (52) qui présente au moins un élément d'appui (56, 87) associé à la zone de travail (34), réalisé pour l'appui de l'objet (2) saisi ou à saisir, dans lequel de manière appropriée, l'au moins un élément d'appui (87) peut être approché en réalisant un mouvement de levage (88) par rapport à la structure porteuse (14) de la zone de travail (34) ou peut être dégagé de la zone de travail (34), dans lequel un dispositif d'entraînement de levage (97) réalisé pour l'influence du mouvement de levage (88) y est associé de manière appropriée et/ou dans lequel il est précontraint de manière appropriée par un dispositif de ressort (92) dans une position sortie dégagée de la zone de travail (34).

17. Dispositif de manipulation selon l'une quelconque des revendications 1 à 16, **caractérisé en ce qu'**il présente le dispositif de positionnement (5), dans lequel le dispositif de préhension par adhésion (4) est fixé par le biais de son interface de fixation (6) au dispositif de positionnement (5).
